# EUROPÄISCHE PATENTSCHRIFT

(11) **EP 2 723 484 B1**
(45) Veröffentlichungstag und Bekanntmachung des Hinweises auf die Patenterteilung: **09.12.2015**
(21) Anmeldenummer: 12719935.4
(22) Anmeldetag: 04.05.2012
(51) Int. Cl.: B01F 17/14, C08G 18/28, C08G 18/32

(54) **DISPERGIERADDITIVE AUF BASIS VON PHOSPHORSÄUREESTERDERIVATEN**
DISPERSER ADDITIVES ON THE BASIS OF PHOSPHORIC ACID ESTER DERIVATIVES
ADDITIF DE DISPERSION À BASE DE DÉRIVÉS D'ESTERS D'ACIDE PHOSPHORIQUE

(30) Priorität: 22.06.2011 EP 11005093
(43) Veröffentlichungstag der Anmeldung: 30.04.2014
(73) Patentinhaber: BYK-Chemie GmbH, 46483 Wesel (DE)
(72) Erfinder: GÖBELT, Bernd, 46487 Wesel (DE); NAGELSDIEK, René, 46499 Hamminkeln (DE); OMEIS, Jürgen, 46286 Dorsten-Lembeck (DE); PIESTERT, Frederik, 46483 Wesel (DE); PRITSCHINS, Wolfgang, 46487 Wesel (DE); MEZNARIK, Natasa, 47198 Duisburg (DE); SCHRÖDER, Daniela, 47495 Rheinberg (DE); TIEGS, Werner, 46459 Rees (DE)
(86) Internationale Anmeldenummer: PCT/EP2012/001906
(87) Internationale Veröffentlichungsnummer: WO 2012/175157

(56) Entgegenhaltungen:
- EP-A2- 0 127 325
- EP-A2- 0 417 490
- EP-A2- 1 837 355
- DE-A1- 19 529 242
- DE-A1- 19 842 952

## Beschreibung

Die vorliegende Erfindung betrifft Phosphorsäureesterderivate, deren Herstellung und Verwendung, eine Additivkomposition und deren Verwendung, ein Feststoffgemenge, einen Lack und einen Kunststoff.

Netzmittel, welche gelöst oder dispergiert in einer Flüssigkeit vorliegen, setzen die Oberflächenspannung bzw. die Grenzflächenspannung herab und vergrößern so das Netzvermögen der Flüssigkeit. Auf diese Weise ermöglichen Netzmittel in vielen Fällen erst überhaupt eine Oberflächenbenetzung.

Dispergiermittel eignen sich im Allgemeinen zur Stabilisierung von Feststoffteilchen in Bindemitteln, Lacken, Pigmentpasten, Kunststoffen und Kunststoffmischungen, Kleb- und Dichtstoffen, zur Reduktion der Viskosität entsprechender Systeme sowie zur Verbesserung der Fließeigenschaften. Dispersionsstabilisatoren werden zur Stabilisierung bereits erzeugter Dispersionen eingesetzt.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Im Falle derartiger Dispergiermittel handelt es sich um oberflächenaktive Stoffe, anionischer, kationischer und/ oder neutraler Struktur. Diese Stoffe werden in kleiner Menge entweder direkt auf den Feststoff aufgebracht oder dem Dispergiermedium zugesetzt. Wesentlich ist weiterhin, dass auch nach vollständiger Deflockulierung der Feststoffagglomerate in Primärteilchen (nach dem Dispergierprozess) Reagglomerationen auftreten können, wodurch der Dispergieraufwand teilweise oder vollständig zunichte gemacht wird. Als Folge von unzulänglicher Dispergierung bzw. von Reagglomeration kommt es typischerweise zu unerwünschten Effekten, wie einem Viskositätsanstieg in flüssigen Systemen, einer Farbtondrift und einem Glanzverlust in Lacken und Beschichtungen sowie einer Verringerung der mechanischen Festigkeit und der Materialhomogenität in Kunststoffen.

Als Netz- und Dispergiermittel kommen in der Praxis verschiedenartige Verbindungstypen in Frage. Dies ist insbesondere darin begründet, dass eine hohe Zahl verschiedener Systeme existiert, welche insbesondere auf verschiedenartigen Bindemitteln kombiniert mit unterschiedlichen zu dispergierenden Partikeln, wie Pigmenten, Füllstoffen sowie Fasern, basiert.

Die EP 1 837 355 A betrifft verzweigte, Biuretgruppen enthaltende Addukte, welche durch Addition an Uretdiongruppen herstellbar sind. Derartige Addukte sind zwar erprobte Dispergiermittel, welche jedoch bezüglich der Qualitätseigenschaften Verträglichkeit, Löslichkeit und Viskosität in der Regel nicht optimal sind.

Die US 5,130,463 A sowie die DE 195 29 242 betreffen jeweils den Einsatz von speziellen Phosphorsäureestern als Netz- und Dispergiermittel. Besagte Phosphorsäureester eignen sich allgemein zur Dispergierung von Feststoffen mit basischen Oberflächen. Allerdings ist in diesen Phosphorsäureestern für viele Dispergiergieraufgaben, u. a. aufgrund begrenzter Universalität gegenüber zu dispergierenden Feststoffen (nicht selten gegenüber denjenigen, die keine basischen Oberflächen aufweisen), nicht die optimale und vollständige Lösung zu sehen.

Der vorliegenden Erfindung lag somit die Aufgabe zugrunde, qualitativ hochwertige sowie möglichst breit einsetzbare Dispergiermittel bereitzustellen, die sich insbesondere gut zur Dispergierung von Feststoffen mit basischen Oberflächen eignen.

Die Lösung dieser Aufgabe sind Phosphorsäureesterderivate, die gemäß der allgemeinen Formel (I) vorliegen

Y(-O-CO-NH-R¹-NH-CO-X-Z¹)_{q} (I)

mit
Y gleich oder verschieden sowie repräsentiert durch einen 1 bis 1000 Kohlenstoffatome aufweisenden verzweigten oder unverzweigten, gesättigten oder ungesättigten organischen Rest,
q gleich oder verschieden sowie repräsentiert durch eine ganze Zahl von 1 bis 10,
R¹ gleich oder verschieden sowie repräsentiert durch einen 6 bis 20 Kohlenstoffatome enthaltenden gesättigten oder ungesättigten, verzweigten oder unverzweigten organischen Rest,
X gleich oder verschieden sowie repräsentiert durch NH und/oder NZ²
   mit
   Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens 2 Kohlenstoffatome enthaltenden verzweigten oder unverzweigten, gesättigten oder ungesättigten organischen Rest, der mindestens eine Phosphorsäureestergruppe aufweist.

Die Formulierung "gleich oder verschieden" soll bedeuten, dass die jeweilige Zahl, der jeweilige Rest, Substituent bzw. Molekülbestandteil sowohl innerhalb eines (Makro)Moleküls als auch zwischen verschiedenen (Makro)Molekülspezies der gleichen allgemeinen Formel variieren können.

Y ist in der allgemeinen Formel (I) als ein organischer Rest anzusehen, der 1 bis 10 Substituenten -O-CO-NH-R¹-NH-CO-X-Z¹ aufweist. Üblicherweise enthält Y mindestens q Kohlenstoffatome, wobei an den einzelnen Kohlenstoffatomen von Y maximal ein Substituent -O-CO-NH-R¹-N-H-CO-X-Z¹ gebunden ist.

Es ist hervorzuheben, dass die erfindungsgemäßen Phosphorsäureesterderivate eine gute Dispergierwirkung bezüglich eines breiten Spektrums von zu dispergierenden Feststoffen zeigen. Dies zeigt sich u. a. darin, dass nicht nur Feststoffe mit basischen Oberflächen besonders gut, sondern auch Feststoffe mit neutralen und sogar sauren Oberflächen effektiv dispergiert werden können.

Die erfindungsgemäßen Phosphorsäureesterderivate sind demgemäß von besonders hoher Qualität und universell als Netz- und Dispergiermittel einsetzbar. Weiterhin kann gesagt werden, dass die erfindungsgemäßen Phosphorsäureesterderivate sowohl in polaren als auch in unpolaren Bindemittelsystemen erfolgreich eingesetzt werden können, und dabei als Netz- und Dispergiermittel bzw. als Dispersionsstabilisatoren eine ausgezeichnete Verträglichkeit zeigen. Dies gewährleistet den erfolgreichen Einsatz in Kombination mit den unterschiedlichsten Bindemitteln und Überzugsmaterialien. Weiterhin ermöglichen die erfindungsgemäßen Phosphorsäurederivate eine flockulationsfreie Mischbarkeit von Pasten, insbesondere Pigmentpasten, bzw. der mit diesen Pasten hergestellten Bindemitteln. Darüber hinaus eignen sich die erfindungsgemäßen Phosphorsäurederivate als Dispersionsstabilisatoren, insbesondere als Emulsionsstabilisatoren. Durch den Einsatz der erfindungsgemäßen Phosphorsäurederivate wird die Viskosität des eingetragenen Mahlgutes während der Dispergierung deutlich reduziert und ermöglicht auf diese Weise die Herstellung von Formulierungen, welche einen hohen Feststoffanteil aufweisen. Auf diese Weise kann zur besseren Umweltverträglichkeit der Anteil an (flüchtigen) Lösemitteln reduziert werden. Resümierend kann gesagt werden, dass die erfindungsgemäßen Phosphorsäureesterderivate bei guter Stabilisierung von Pigmenten oder Füllstoffen die Mahlgutviskosität entsprechender Lacke, Pasten oder Kunststoffformulierungen soweit senken, dass eine Verarbeitung bei hohem Füllgrad möglich ist, ohne dass die Beständigkeit der ausgehärteten Lacke negativ beeinflusst werden. Schließlich ist zu erwähnen, dass die erfindungsgemäßen Phosphorsäureesterderivate wirtschaftlich herstellbar sind und auf allgemein verfügbaren Ausgangsstoffen basieren.

Die vorliegende Erfindung betrifft auch ein Verfahren zur Herstellung der erfindungsgemäßen Phosphorsäureesterderivate, wobei in diesem Verfahren in einem ersten Verfahrensschritt ein Diisocyanat R¹(NCO)₂ mit einem Alkohol Y(-OH)q unter Ausbildung eines Urethans der allgemeinen Formel (IV)

Y(-O-CO-NH-R¹-NCO)_{q} (IV)

umgesetzt wird und in einem zweiten Schritt das Urethan der allgemeinen Formel (IV) mit einem mindestens eine Hydroxylgruppe sowie die Gruppe X aufweisenden Amin zu einem mindestens eine Hydroxylgruppe aufweisenden Harnstoffurethan umgesetzt wird, wobei in einem dritten Schritt mindestens eine Hydroxylgruppe des Harnstoffurethans einer Umsetzung zu einer Phosphorsäureestergruppe unterzogen wird, mit der Maßgabe, dass Y, q, R¹ sowie X die vorstehend definierten Entsprechungen aufweisen.

In einer bevorzugten Ausführung der Erfindung ist q gleich oder verschieden und wird durch eine ganze Zahl von 1 bis 5, bevorzugt durch 1 und/oder 2, repräsentiert.

Durch den Parameter q wird maßgeblich die Struktur des Phosphorsäurederivatmoleküls vorgegeben. Die Tatsache, dass q gleich oder verschieden sein kann, bedeutet, dass auch Mischungen verschiedener Spezies eingesetzt werden können, welche sich jeweils durch den Wert q unterscheiden.

Spezies mit q > 1, beispielsweise mit q = 2 bis 5, verbessern in der Regel insbesondere das Antiabsetzverhalten, während Spezies mit geringern "q-Werten", insbesondere mit q = 1, meist insbesondere verstärkt zum Deflokkulationsverhalten beitragen. Allgemein kann gesagt werden, dass je größer q desto mehr Haftgruppen pro Molekül und desto stärker in der Regel die Haftung des Molekül an Feststoffoberflächen.

Zur Optimierung der Deflokkulationswirkung sollten zweckmäßigerweise (ggf. ausschließlich) Spezies mit q = 1 eingesetzt werden.

In einer besonders bevorzugten Ausführung der Erfindung wird somit q durch 1 repräsentiert, so dass die Phosphorsäureesterderivate gemäß der allgemeinen Formel (la) vorliegen

Y-O-CO-NH-R¹-NH-CO-X-Z¹ (la)

mit
Y gleich oder verschieden sowie repräsentiert durch einen 1 bis 1000 Kohlenstoffatome aufweisenden verzweigten oder unverzweigten, gesättigten oder ungesättigten organischen Rest,
R¹ gleich oder verschieden sowie repräsentiert durch einen 6 bis 20 Kohlenstoffatome enthaltenden gesättigten oder ungesättigten, verzweigten oder unverzweigten organischen Rest,
X gleich oder verschieden sowie repräsentiert durch NH und/oder NZ²
   mit
   Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens 2 Kohlenstoffatome enthaltenden verzweigten oder unverzweigten, gesättigten oder ungesättigten organischen Rest, der mindestens eine Phosphorsäureestergruppe aufweist.

Durch die allgemeine Formel (la) wird eine ganz besonders bevorzugte Ausführungsform der Erfindung repräsentiert, wobei die Herstellung der entsprechenden Phosphorsäureesterderivate in besonders bevorzugter Weise auf Basis der entsprechenden Monoalkohole Y-OH erfolgt (siehe nachstehend). Der Einsatz von Phosphorsäurederivaten mit q gleich 1, welche somit gemäß der allgemeinen Formel (la) vorliegen, ist in der Regel dann zu empfehlen, wenn insbesondere eine stark deflokkulierende Wirkung des Netz- und Dispergiermittels angestrebt wird.

Meist enthält Y der erfindungsgemäßen Phosphorsäureesterderivate mindestens einen Polyetherrest, Polyesterrest, Kohlenwasserstoffrest und/oder Polysiloxanrest. Häufig enthält Y nicht nur einen, sondern mehrere der genannten Resttypen.

Der im erfindungsgemäßen Verfahren eingesetzte Alkohol Y(-OH)q kann zusätzliche Heteroatome, wie O, S, Si und/oder N, aufweisen, bzw. Ether-, Urethan-, Carbonat-, Amid-, Harnstoff- und/oder Estergruppen enthalten. Gegebenenfalls ist in den Gruppen Y Wasserstoff gegen Halogen (beispielsweise Fluor und/oder Chlor) substituiert. Der Rest Y kann weitere Gruppen, wie C=C-Doppelbindungen, tragen, die sich bei der Bildung des Additionsproduktes inert verhalten. Die gegebenenfalls vorhandenen Ester, Ether, Urethan, Carbonat und/oder Siloxan-Gruppen können in Blockstruktur vorliegen (beispielsweise Poly(ethylenoxidblock-propylenoxydblock-epsilon-caprolacton), einen Gradienten bilden oder auch statistisch angeordnet sein.

Zu Ethergruppen bzw. Polyethern, welche in Y enthalten sein können:
Als Y-(OH)_{q} können auch Mono-, Di-, oder Polyhydroxypolyether eingesetzt werden. Diese können zum Beispiel durch Alkoxylierung von vorstehend als Y-(OH)_{q} beschriebenen Verbindungen, wie Alkanolen, Cycloalkanolen, Phenolen mit Alkylenoxiden wie Ethylenoxid, Propylenoxid, Butylenoxid, Styroloxid, aliphatischen oder aromatischen Glycidethern wie Isopropylglycidether, Butylglycidether, Allyglycideter, 2-Ethylhexylglycidether, Kresylglycidether und Phenylglycidether dargestellt werden. Es können auch Mischungen dieser Rohstoffe eingesetzt werden. Im Falle von gemischten Polyethern können diese statistisch, in Gradientenform oder in Blöcken angeordnet sein.
Diese Polyether haben häufig ein zahlenmittleres Molekulargewicht (Mₙ) im Bereich von etwa 100 bis 25000, besonders häufig von 150 bis 15000 und besonders typisch von 200 bis 10000 g/mol.
Bevorzugt sind Polyether auf Basis von Ethylenoxid, Propylenoxid und deren Mischungen.

Beispiele sind hydroxyfunktionelle Vinylverbindungen, wie Hydroxybutylvinylether, monohydroxyfunktionelle Polyoxyalkylenmonoalkohole, wie Allylpolyether (z.B. Polyglykol A 350, Polyglykol A 500, Polyglykol A 1100, Polyglykol A 11-4, Polyglykol A 20-10 oder Polyglykol A 20-20 der Clariant AG oder Pluriol^{®} A 010 R, Pluriol^{®} A 11 RE, Pluriol^{®} A 13 R, Pluriol^{®} A 22 R oder Pluriol^{®} A 23 R der BASF AG), Vinylpolyether (wie Polyglykol V 500, Polyglykol V 1100 oder Polyglykol V 5500 der Clariant AG), Methanol gestartete Polyoxyethylenmonoalkohole (wie Pluriol^{®} A 350 E, Pluriol^{®} A 500 E, Pluriol^{®} A 750 E, Pluriol^{®} A 1020 E, Pluriol^{®} A 2000 E oder Pluriol^{®} A 5010 E der BASF AG), Alkanol gestartete Polyoxypropylenmonoalkohole (wie z.B. Polyglykol B01 / 20, Polyglykol B01 / 40, Polyglykol B01 / 80, Polyglykol B01 / 120 oder Polyglykol B01 / 240 der Clariant AG oder Pluriol^{®} A 1350 P oder Pluriol^{®} A 2000 P der BASF AG) und mit verschiedenen Fettalkoholen gestarteten Polyalkoxylate mit variablem Alkoxylierungsgrad (unter den Handelsnamen Lutensol^{®} A, Lutensol^{®} AT, Lutensol^{®} AO, Lutensol^{®} TO, Lutensol^{®} XP, Lutensol^{®} XL, Lutensol^{®} AP und Lutensol^{®} ON der BASF SE bekannt). Bevorzugt werden Polyoxyalkylenmonoalkohole verwendet, die Ethylenoxid- und/oder Propylenoxid- und/oder Butylenoxidgruppen enthalten und gegebenenfalls mit Styroloxid modifiziert sind. Besonders bevorzugt ist die Verwendung von Polyoxyalkylenmonoalkoholen (wie Polyglykol B 11/50, Polyglykol B 11/70, Polyglykol B 11/100, Polyglykol B 11/150, Polyglykol B 11/300 oder Polyglykol B 111700 von der Clariant AG, Pluriol^{®} A 1000 PE, Pluriol^{®} A 1320 PE, oder Pluriol^{®} A 2000 PE der BASF AG oder Terralox WA 110 von DOW Chemicals), bei denen es sich um Butanol gestartete Polyoxyalkylene aus Ethylen- und Propylenoxid mit einer terminalen OH-Gruppe handelt.

In der Regel enthält Y 1 bis 450 Ethersauerstoffatome, welche bevorzugt in Ethersauerstoffatome aufweisenden Gruppen enthalten sind, die sich ableiten von Polytetrahydrofuran, Polyoxetanen und/oder Polyoxiranen.

Bevorzugt enthält Y 3 bis 400 Ethersauerstoffatome, wobei mindestens 50, bevorzugt mindestens 80 Mol-% der Ethersauerstoffatome in Ethylenoxid- und/oder Polypropylenoxid-Struktureinheiten vorliegen.

Zu Kohlenwasserstoffresten, welche in Y enthalten sein können:
Die Kohlenwasserstoffreste liegen bevorzugt als Arylrest, als verzweigter oder unverzweigter Alkylarylrest, Aralkylrest und/oder als acyclischer, cyclischer verzweigter oder unverzweigter Alkylrest vor. Es können auch Gemische solcher Verbindungen, d.h. mindestens zwei verschiedene Verbindungen Y-(OH)_{q} eingesetzt werden. Die aliphatischen oder araliphatischen Verbindungen Y-(OH)_{q} können geradkettig oder verzweigt, gesättigt oder ungesättigt vorliegen. Gesättigte Spezies sind bevorzugt.

Beispiele für Y(-OH)q mit Kohlenwasserstoffresten - bei q = 1 - sind Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Alkylnaphthole und Phenylethanol.

Beispiele für Y(-OH)q mit Kohlenwasserstoffresten - bei q > 1 - sind Butandiol, Hexandiol, Cyclohexandimethanol, Neopentylglykol, Ethylenglykol, Glycerin, Trimethylolpropan und Zucker (wie Pentaerythrit).

Weiterhin können Y(-OH)q Polyolefinpolyole oder -monoole, wie nichthydrierte, teilhydrierte und/ oder vollständig hydrierte Polybutadiene, nichthydrierte, teilhydrierten und/ oder vollständig hydrierte Polyisoprene, Polyisobutylene, Polypropylene oder Ethylen/Butylen-Copolymere sein. Diese Verbindungen sind bekannt. So wird beispielsweise der Zugang zu hydroxyfunktionellem Polyisobutylenen in US 6875897 beschrieben.

Zu Estergruppen bzw. Polyestern, welche in Y enthalten sein können:
Als Y-(OH)_{q} können auch Monohydroxymonoester und Mono-, Di-, oder Polyhydroxypolyester eingesetzt werden.

Hydroxyfunktionelle Acrylate oder Methacrylate, wie Hydroxyethylacrylat, Hydroxyethylmethacrylat, Hydroxybutyl(meth)acrylat sind Beispiele für geeignete Monohydroxymonoester.

Polyester können z.B. durch Umsetzung von Dicarbonsäuren sowie deren veresterbaren Derivaten, wie Anhydriden, Säurechloriden oder Dialkylestern (wie Dimethylestern oder Diethylestern) durch Umsetzung mit Diolen und mono-, di-, oder trifunktionellen Startkomponenten, hergestellt werden. Die Bildung von Dihydroxypolyestern kann bei Bedarf durch Einsatz entsprechend stöchiometrischer Mengen an Monohydroxyverbindungen zurückgedrängt werden. Die Veresterung kann in Substanz oder auch durch azeotrope Veresterung in Anwesenheit eines Schleppmittels durchgeführt werden. Beispiele für Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere sowie Hydrierungsprodukte. Beispiele für entsprechende Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Bevorzugte Polyester für den Einsatz als Y(-OH)q sind solche, die durch Polykondensation einer oder mehrerer, gegebenenfalls alkylsubstituierter, Hydroxycarbonsäuren und/oder Ringöffnungspolymerisation der korrespondierenden Lactone, wie Propiolacton, Valerolacton, Butyrolacton, Caprolacton und/ oder substituierten Lactonen mittels einer Mono-, Di, - oder Trihydroxy-Startkomponente (wie in US-A-4 647 647 beschrieben) erhalten werden können. Bevorzugt besitzen diese ein zahlenmittleres Molekulargewicht Mₙ von 150 bis 5000 g/mol. Als Startkomponente sind im Prinzip alle anderen als Y-(OH)_{q} aufgeführten Verbindungen einsetzbar. Es können auch jeweils Gemische der vorgenannten Verbindungen eingesetzt werden. Die Lactonpolymerisation wird nach bekannten Verfahren, initiert durch beispielsweise Titanate, p-Toluolsulfonsäure oder Dibutylzinndilaurat, bei Temperaturen von etwa 70° C bis 180°C durchgeführt. Besonders bevorzugt sind Polyester auf ε-Caprolacton-Basis, gegebenenfalls in Kombination mit δ-Valerolacton.

Zu Urethanresten bzw. Polyurethanen, welche in Y enthalten sein können:
Als Y-(OH)_{q} können auch Polyurethane, Polyether- Polyurethane, Polyester-Polyurethane und/oder Polyether-Polyester-Polyurethane eingesetzt werden, die durch Additionsreaktion von Diisocyanaten, mit Dihydroxyverbindungen in Anwesenheit von mono-, di-, oder trifunktionellen Startkomponenten erhalten werden können. Als Hydroxyverbindungen zum Aufbau der urethangruppenhaltigen Verbindungen Y-(OH)_{q} werden bevorzugt Diole mit 2 bis 12 Kohlenstoffatomen, Polyoxyalkylenglykole und dihydroxyfunktionelle Polyester eingesetzt. Die Polyether und Polyester sind vorstehend beschrieben.

Zu Polycarbonaten, welche in Y enthalten sein können:
Der Rest Y kann auch Carbonatgruppen enthalten, wie diese durch bekannte Umsetzungen mit offenkettigen und/oder cyclischen Carbonaten erhalten werden. Geeignet sind zum Beispiel mit Carbonaten modifizierte lineare Polyester oder Polycarbonatdiole, wie diese in der Polyurethanherstellung verwendet werden. Beispiele sind beschrieben in der US-4 101 529. Geeignete Carbonate sind z.B. aliphatische, cycloaliphatische, araliphatische und/oder aromatische Kohlensäureester, wie Dialkylcarbonate, z.B. Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Zu Polyoxazolinen, welche in Y enthalten sein können:
Als Y-(OH)_{q} können auch hydroxyfunktionelle Poly-2-alkyl-2-oxazoline oder Poly-2-alkyl-2-oxazine fungieren. Bevorzugt werden monohydroxyfunktionelle Verbindungen eingesetzt. Poly-2-alkyl-2-oxazoline oder Poly-2-alkyl-2-oxazine werden durch kationische, ringöffnende Polymerisation von 2-Alkyl-2-oxazolinen oder 2-alkyl-2-oxazinen mit Initiatoren, wie Para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern, so ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline'oder Poly-2-alkyl-2-oxazine besitzen meist ein zahlenmittleres Molekulargewicht Mₙ von 300 bis 20000 g/mol, bevorzugt von 500 bis 10000 g/mol. Einsetzbar sind unter anderem verschiedenartige 2-Oxazoline, welche eventuell zusätzliche funktionelle Gruppen aufweisen können. Derartige Spezies sind beispielsweise entsprechende fettsäurebasierte 2-Oxazoline.

Zu OH-funktionelle Polymeren von ethylenisch ungesättigten Verbindungen, welche in Y enthalten sein können:
Als Y-(OH)_{q} können auch OH-funktionelte Polymere von ethylenisch ungesättigten Monomeren eingesetzt werden.
Die OH-Funktionen können über die ethylenisch ungesättigte Monomere, über Initiatoren oder Kettenregler in bekannter Weise eingeführt werden. Bevorzugt sind monohydroxyfunktionelle Polyacrylsäureester bzw. Polymethacrylsäureester. Solche Verbindungen sind auf diesem Gebiet der Technik bereits zur Herstellung von anderen Dispergiermitteln verwendet worden, wie sie in der US-A-4 032 698 bzw. in der EP 318 999 beschrieben sind. Diese Polyacrylate haben meist ein zahlenmittleres Molekulargewicht Mₙ von 300 bis 20000 g/mol, bevorzugt meist von 500 bis 10000 g/mol. Diese können in Blockstruktur oder auch statistisch angeordnet sein oder einen Gradienten bilden.

Beispiele für OH-funktionelle ethylenisch ungesättigte Monomere sind Hydroxyalkyl(meth)acrylate von geradkettigen, verzweigten oder cycloaliphatischen Diolen mit 2 bis 36 C-Atomen, wie 3-Hydroxypropylmethacrylat, 3,4-Dihydroxybutylmonomethacrylat, 2-Hydroxyethyl(meth)acrylat, 4-Hydroxybutyl(meth)acrylat, 2-Hydroxypropylmethacrylat, 2,5-Dimethyl-1,6-hexandiolmonomethacrylat; Caprolacton- und/oder Valerolacton-modifizierte Hydroxyalkyl(meth)acrylate (wobei die Hydroxy(meth)acrylate bevorzugt von geradkettigen, verzweigten oder cycloaliphatischen Diolen mit 2 bis 8 C-Atomen abgeleitet sind); OH-funktionelles Poly(ethylenglycol)(meth)acrylat und OH-funktionelles Poly(propylenglycol)(meth)acrylat.

Beispiele für weitere ethylenisch ungesättigte Monomere sind Alkyl(meth)acrylate von geradkettigen, verzweigten oder cycloaliphatischen Alkoholen mit 1 bis 22 C-Atomen, wie Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobornyl(meth)acrylat und t-Butyl(meth)acrylat; Aryl(meth)acrylate, wie Benzylmethacrylat oder Phenylacrylat (wobei die Arylreste jeweils unsubstituiert oder bis zu vierfach substituiert sein können), wie 4-Nitrophenylmethacrylat; Mono(meth)acrylate von Ethern, Polyethylenglykolen, Polypropylenglycolen oder gemischten Polyethylen/propylenglycolen mit 5 bis 80 C-Atomen, wie Tetrahydrofurfurylmethacrylat, Methoxyethoxyethylmethacrylat, 1-Butoxypropylmethacrylat, Cyclohexyloxym ethylmethacrylat, Methoxymethoxyethylmethacrylat, Benzyloxymethylmethacrylat, Furfurylmethacrylat, 2- Butoxyethylmethacrylat, 2-Ethoxyethylmethacrylat, Allytoxymethylmethacrylat, 1-Ethoxybutylmethacrylat, 1-Ethoxyethylmethacrylat, Ethoxymethylmethacrylat, Poly(ethylenglycol)methylether(meth)acrylat, Poly(propylenglycol)methylether(meth)acrylat; Aminoalkyl(meth)acrylate, wie N,N-Dimethylaminoethyl(meth)acrylat, 2-Trimethylammoniumethylmethacrylatchlorid und N,N-Dimethylaminopropyl(meth)acrylat; (Meth)acrylate von halogenierten Alkoholen, wie Perfluoralkyl(meth)acrylate mit 6 bis 20 C-Atomen; Styrol und substituierte Styrole, wie 4-Methylstyrol, Methacrylnitril und Acrylnitril; ethylenisch ungesättigte Heterocyclen, wie zum Beispiel 4-Vinylpyridin und 1-[2-(Methacryloyloxy)-ethyl]-2-imidazolidinon; Vinylester von Carbonsäuren mit 1 bis 20 C-Atomen, wie Vinylacetat; Maleinimid, N-Phenylmaleinimid und N-substituierte Maleinimide mit geradkettigen, verzweigten oder cycloaliphatischen Alkylgruppen mit 1 bis 22 C-Atomen, wie N-Ethylmaleinimid und N-Octylmaleinimid; (Meth)acrylamid; N-Alkyl- und N,N-Dialkylsubstituierte Acrylamide mit geradkettigen, verzweigten oder cycloaliphatischen Alkylgruppen mit 1 bis 22 C-Atomen, wie N-(t-Butyl)acrylamid und N,N-Dimethylacrylamid;

Bevorzugte nicht OH-funktionelle Monomere sind Alkyl(meth)acrylate, Aryl(meth)acrylate und Styrol.

Zu Polysiloxanen, welche in Y enthalten sein können:
Als Y-(OH)_{q} können auch mono- oder polyhydroxyfunktionelle Polysiloxane eingesetzt werden.
Die Polysiloxane lassen sich mit der nachstehenden allgemeinen Formel beschreiben: 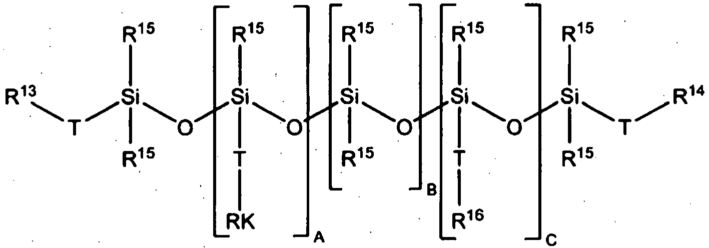
mit
- T: = C₁-C₁₄-Alkylen,
- RK: = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem gewichtsmittleren Molekulargewicht zwischen 200 und 4000 g/mol,
- R¹³ und R¹⁴: jeweils unabhängig repräsentiert durch C₁-C₁₄-Alkyl, -Aryl oder -Aralkyl, -O(C₁-C1₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK,
- R¹⁵: = C₁-C₁₄-Alkyl, -Aryl oder -Aralkyl,
- R¹⁶: = polyhydroxyfunktioneller verzweigter Polyglycidol-Polyetherrest, der aus einer verzweigten Polyglycidolgruppe besteht oder diese enthält,
- A: = 0 - 20, bevorzugt 1-15, besonders bevorzugt 1 - 8,
- B: = 2 - 300, bevorzugt 10 - 200, besonders bevorzugt 15 - 100 und
- C: = 0 - 20, bevorzugt 1 - 15, besonders bevorzugt 1 - 8,
wobei bei C = 0 gilt, dass R¹⁴ = R¹⁶ und/oder R¹³ = R¹⁶. Wenn die Einheit -[SiR¹⁵(Z-R¹⁶)]-O- vorhanden ist, d. h. C mindestens 1 ist, so ist es möglich, dass R¹³ und R¹⁴ verschieden von R¹⁶ sind.

Die genannten Polysiloxanreste können auch als organomodifizierte Polysiloxanreste vorliegen.

Zum eingesetzten Diisocyanat bzw. zu R¹:
Als im erfindungsgemäßen Verfahren eingesetztes Diisocyanat können insbesondere die aus der Polyurethanchemie an sich bekannten aliphatischen, cycloaliphatischen und/oder aromatischen Diisocyanate mit 6 bis 15 Kohlenstoffatomen verwendet werden, wie Tetramethylendiisocyanat, Hexamethylendiisocyanat, 1,2-Diisocyanatocyclohexan, 1,3 Diisocyanatocyclohexan, 1,4-Diisocyanatocyclohexan, Isophorondiisocyanat, Dicyclohexylmethan-2,4'-diisocyanat, Trimethylhexamethylendiisocyanat, Dodecamethylendiisocyanat, 2,4-Toluylendiisocyanat, 2,6-Toluylendiisocanat, Diphenylmethandiisocyanat, Methylenbis(-4-cyclohexylisocyanat) oder 1,4-Cyclohexanbis(methylisocyanat).

In der Regel ist R¹ der erfindungsgemäßen Phosphorsäureesterderivate gleich oder verschieden und liegt in Form eines Kohlenwasserstoffrests, bevorzugt als Arylengruppe, als verzweigte oder unverzweigte Alkylarylengruppe und/oder als azyklische, zyklische verzweigte oder unverzweigte Alkylengruppe vor.

Besonders bevorzugt resultiert R¹ aus dem Kohlenwasserstoffrest eines zwei unterschiedlich reaktive NCO-Gruppen enthaltenden Diisocyanats bevorzugt von Toluol-2,4-diisocyanat und/oder isophorondiisocyanat.

In einer bevorzugten Ausführungsform der Erfindung ist Z¹ der erfindungsgemäßen Phosphorsäureesterderivate gleich oder verschieden und wird repräsentiert durch die allgemeine Formel (II)

R'-O-PO(OR³)ₙ(OH)₂₋ₙ (II)

mit
R² gleich oder verschieden sowie repräsentiert durch einen mindestens zwei Kohlenstoffatome aufweisenden gesättigten oder ungesättigten, verzweigten oder unverzweigten organischen Rest,
R³ gleich oder verschieden sowie repräsentiert durch einen mindestens ein Kohlenstoffatom enthaltenden gesättigten oder ungesättigten, verzweigten oder unverzweigten organischen Rest sowie
n gleich oder verschieden sowie repräsentiert durch 0 und/oder 1.

Bevorzugt ist n gleich 0.

Allerdings kann n gleich 1 sein und R³ dann beispielsweise repräsentiert werden durch -X-CO-NH-R¹-NH-CO-O-Y. Derartige Substitutionsmuster können insbesondere bei Einsatz spezieller Phosphorilierungsmittel, beispielsweise Phosphorylchlorid, entstehen (siehe nachstehend).

In der Regel ist R² gleich oder verschieden und wird repräsentiert durch einen gesättigten, linearen C₂-C₄₀-Alkylenrest.

In der Regel ist Z² gleich oder verschieden und wird repräsentiert durch einen C₁-C₅₀-Kohlenwasserstoffrest, der optional Ethergruppen enthält und/oder einen gemäß der allgemeinen Formel (III) vorliegenden Rest

R⁴-O-PO(OR⁵)ₘ(OH)₂₋ₘ (III)

mit
R⁴ gleich oder verschieden sowie repräsentiert durch einen mindestens zwei Kohlenstoffatome aufweisenden gesättigten oder ungesättigten, verzweigten oder unverzweigten organischen Rest,
R⁵ gleich oder verschieden sowie repräsentiert durch einen mindestens ein Kohlenstoffatom enthaltenden gesättigten oder ungesättigten, verzweigten oder unverzweigten organischen Rest sowie
m gleich oder verschieden sowie repräsentiert durch 0 und/oder 1.

Häufig ist m gleich 0 sowie R⁴ gleich oder verschieden und bevorzugt repräsentiert durch einen gesättigten, linearen C₂-C₄₀-Alkylenrest.

Die erfindungsgemäßen Phosphorsäureesterderivate können in unversalzter, teilversalzter und/oder versalzter Form vorliegen. Das Vorliegen in nicht versalzter, versalzter und/oder teilversalzter Form ist üblicherweise einerseits abhängig von der jeweiligen chemischen Umgebung (pH-Wert) und andererseits von der Art des Phosphorsäureesterderivates als solches. Als Versalzungskomponente kommen Mono- und Polybasen in Frage.

In dem erfindungsgemäßen Verfahren kann die Isocyanataddition, je nach Reaktivität der einzelnen Reaktionspartner, in dem für diese Art von Reaktion üblichen Temperaturbereich von Raumtemperatur bis etwa 150 °C, bevorzugt bis 100°C, besonders bevorzugt bis 70°C erfolgen. Zur Beschleunigung und Reduzierung von Nebenreaktionen können die bekannten und üblichen Katalysatoren, wie tertiäre Amine, Triethylamin, Dimethylcyclohexylamin, N-Methylmorpholin, N,N'-Dimethylpiperazin, 2-(Dimethylaminoethoxy)ethanol, Diazabicyclo-(2,2,2)octan und ähnliche sowie insbesondere organische Metallverbindungen, wie Titansäureester, Eisenverbindungen wie Eisen-(III)-acetylacetonat, Zinnverbindungen, beispielsweise Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Diisocyanat eingesetzt.

In einer bevorzugten Ausführungsform wird ein Diisocyanat R¹(NCO)₂ eingesetzt, welches zwei unterschiedlich reaktive NCO-Gruppen aufweist, bevorzugt Toluol-2,4-diisocyanat und/oder Isophorondiisocyanat, welches in Schritt 1 gegenüber dem Alkohol Y(-OH)q in einem molaren Verhältnis von mindestens (1,1 * arithmetischer Mittelwert von q) : 1,0, bevorzugt mindestens (2,0 * arithmetischer Mittelwert von q): 1,0, eingesetzt wird, so dass nicht zum Urethan der allgemeinen Formel (IV) umgesetztes Diisocyanat anfällt, welches vor der Durchführung des zweiten Schritts bevorzugt durch Destillation aus dem Reaktionsgemisch entfernt wird und im dritten Schritt bevorzugt Polyphosphorsäure zur Umsetzung mindestens einer Hydroxylgruppe des Harnstoffurethans eingesetzt wird.

Das vorstehend genannte Zeichen * bedeutet multipliziert (mit).

Die Bezeichnung arithmetischer Mittelwert von q" soll bedeuten, dass ein arithmetischer Mittelwert von q zugrunde gelegt wird, welcher aus sämtlichen q-Werten der einzelnen unter die allgemeine Formel (IV) fallenden Urethane gebildet wird. Wäre beispielsweise bei genau der Hälfte der unter die allgemeine Formel (IV) fallenden Urethane q = 2 verwirklicht und bei der entsprechend anderen Hälfte der unter die allgemeine Formel (IV) fallenden Urethane q = 4 verwirklicht, so wäre der entsprechende arithmetische Mittelwert gleich 3.

Der Einsatz des unterschiedlich reaktive NCO-Gruppen aufweisenden Diisocyanats im molaren Überschuss bewirkt eine höhere Selektivität dahingehend, dass bevorzugt nur genau eine NCO-Gruppe des Diisocyanats im ersten Schritt umgesetzt wird. Je größer der molare Überschuss des Diisocyanats, desto höher ist normalerweise die Selektivität bezüglich der Herstellung des im ersten Schritt erzeugten Monoisocyanats. Das aufgrund des Einsatzes im Überschuss anfallende nicht umgesetzte Diisocyanat wird möglichst vollständig aus dem Reaktionsgemisch entfernt, um letztendlich den Anteil des daraus entstehenden Diharnstoffs möglichst gering zu halten. Die im zweiten Schritt erfolgende Umsetzung zum Harnstoffurethan sollte jedoch möglichst mit einer ausreichenden Menge Amin erfolgen, so dass die Menge der eventuell im Reaktionsgemisch verbleibenden Isocyanatgruppen (insbesondere auch die Restmenge des Diisocyanats) besonders stark reduziert wird. Optimalerweise sollte das einsatzfähige Reaktionsgemisch aufgrund der hohen Qualitätserfordernisse möglichst frei von Diisocyanat sein. Allerdings sollte auch der Anteil des im ersten Verfahrensschritt erzeugten Urethans der allgemeinen Formel (IV) möglichst stark reduziert werden.

Die im erfindungsgemäßen Verfahren eingesetzten mindestens eine Hydroxylgruppe sowie die Gruppe X aufweisendes Amine weisen in der Regel die nachstehenden allgemeinen Strukturen auf:

H₂N-R²-OH

HZ²N-R²-OH

HN(-R²-OH)₂

mit Z² und R² wie jeweils vorstehend beschrieben, jedoch bevorzugt mit R² gleich oder verschieden und repräsentiert durch eine verzweigte oder unverzweigte Alkylengruppe mit 2 bis12 Kohlenstoffatomen.

Konkrete Beispiele für entsprechende OH-funktionelle Amine sind Ethanolamin, Propanolamin, iso-Propanolamin, 5-Aminopentanol, 2-(2-Aminoethoxy)ethanol, N-Methylethanolamin, N-Ethylethanolamin, N-Butylethanolamin, Diethanolamin, 3-((2-Hydroxyethyl)amino)-1-propanol, Diisopropanolamin und N-(2-Hydroxyethyl)anilin.

Das Urethan (IV) reagiert normalerweise mit dem OH-funktionellen Amin zum Harnstoffurethan unter den gleichen Reaktionsbedingungen wie die Addition der Alkoholkomponente Y(-OH)q an das Diisocyanat. Da das Amin des OH-funktionellen Amins mit der Isocyanatgruppe des Urethans (IV) deutlich schneller reagiert als die Hydroxyfunktion, kann die Additionsreaktion auch ohne Katalysatoren durchgeführt werden.

Die erfindungsgemäßen Phosphorsäureester werden zweckmäßig hergestellt durch die Umsetzung von mindestens einer Hydroxylgruppe des Harnstoffurethans mit einer esterbildenden Phosphorverbindung.

Unter einer esterbildenden Phosphorverbindung wird eine Verbindung verstanden, die durch Umsetzung mit einer Hydroxylgruppen enthaltenden Verbindung Phosphorsäureester bilden kann. Als esterbildende Phosphorverbindungen können beispielsweise Polyphosphorsäure, Phosphorpentoxid, Phosphoroxichlorid und Acetylphosphat eingesetzt werden. Bevorzugt werden Polyphosphorsäure oder Phosphorpentoxid eingesetzt, besonders bevorzugt Polyphosphorsäure.
Mit Polyphosphorsäure entstehen überwiegend Monoester und mit Phosphorpentoxid Mono/Diester-Gemische. Die Monoester sind bevorzugt. Es ist auch möglich, dass bei der Phosphorylierungsreaktion ein Gemisch verschiedener zu phosphorylierender Komponenten eingesetzt wird.

Die Reaktion der esterbildenden Phosphorverbindungen mit den Hydroxylverbindungen erfolgt vorzugsweise ohne Lösungsmittel bei Temperaturen bis 150°C, bevorzugt unter 100°C. Die Reaktion kann aber auch in Gegenwart von geeigneten inerten Lösungsmitteln durchgeführt werden (beispielsweise Methoxypropylacetat).

Durch die sauren Gruppen sind die Phosphorester zur Salzbildung befähigt. Diese können im Sinne der Erfindung als Dispergiermittel auch in Form der entsprechenden Salze eingesetzt werden. In manchen Fällen lässt sich durch eine solche teilweise oder vollständige Versalzung eine Verbesserung der Wirksamkeit und/oder eine verbesserte Löslichkeit oder Verträglichkeit erzielen. Auch in Anwendungen, bei denen die Acidität der Produkte stört, lassen sich häufig Verbesserungen durch teilweise oder vollständige Neutralisation erreichen. Als salzbildende Verbindungen eignen sich Alkali- und Erdalkalimetallsalze, wie Carbonate, Hydrogencarbonate oder Hydroxide, niedermolekulare Amine, wie Triethanolamin, Diethylethanolamin, Dibutylethanolamin und Oleylamin. Weiterhin sind Salze der erfindungsgemäßen Phosphorsäureesterverbindungen mit polymeren Aminen (Polyamine, aminische (Meth)acrylat-Copolymere, Polyallylamine) analog EP- A- 0 893 155 als Netz- und Dispergiermittel möglich.

Die Herstellung der erfindungsgemäßen Verbindungen kann, je nach Viskosität, in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di- oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von C₂-C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen. Zweckmäßig wählt man das oder die Lösemittel bzw. Trägermedien bereits unter Berücksichtigung des geplanten Einsatzgebietes aus. Zum Beispiel werden für erfindungsgemäße Verbindungen für den Einsatz in wasserverdünnbaren Lacksystemen oder zur Belegung von Pigmenten in wässriger Suspension nach der Pigmentsynthese bevorzugt Lösemittel eingesetzt, die ganz oder teilweise wasserverdünnbar sind. Sollen die Produkte zum Beispiel dort eingesetzt werden, wo die Anwesenheit von flüchtigen organischen Verbindungen (VOC) nicht erwünscht ist, sollte die Formulierung möglichst lösemittelfrei oder in entsprechend als VOC-frei geltenden Trägermaterialien vorliegen.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden.

Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen mittels Zusatz von Nichtlösem wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden oder auf inerte Träger aufgezogen werden. Für Anwendungen, bei denen die Verwendung von Feststoffen bevorzugt ist, wie Pulverlacke oder bestimmte Kunststoffverarbeitungsverfahren, können die Verbindungen auch durch weitere bekannte Verfahren in eine feste Form überführt werden. Beispiele für solche Verfahren sind Mikroverkapselung, Sprühtrocknung, Adsorption auf einen festen Träger wie SiO₂ oder das PGSS-Verfahren (Particle from Gas Saturated Solutions).

Im ersten Verfahrensschritt wird bevorzugt als Alkohol ein Monoalkohol Y-OH verwendet, wobei das Diisocyanat R¹(NCO)₂ gegenüber dem Monoalkohol Y-OH in einem molaren Verhältnis von mindestens 1,1 : 1,0, bevorzugt mindestens 2,5 : 1, eingesetzt wird.

Auf diese Weise werden in der Regel qualitativ hochwertige, besonders gut deflokkulierend wirkende Netz- und Dispergiermittel erzeugt.

Die vorliegende Erfindung betrifft weiterhin eine Additivkomposition, die gemäß dem vorstehend beschriebenen Verfahren herstellbar ist, in dem als Alkohol ein Monoalkohol Y-OH eingesetzt wird und das Diisocyanat R¹(NCO)₂ gegenüber dem Monoalkohol Y-OH in einem molaren Verhältnis von mindestens 1,1 : 1,0, bevorzugt mindestens 2,5 : 1, eingesetzt wird. Diese erfindungsgemäße Additivkomposition enthält folgende Komponenten:
i) 10 bis 100 Gew.-% der vorstehend beschriebenen Phosphorsäureesterderivate,
ii) 0 bis 10 Gew.-% Diurethan gemäß der allgemeinen Formel Y-O-CO-NH-R¹-NH-CO-O-Y mit Y gleich oder verschieden,
iii) 0 bis 10 Gew.-% Diharnstoff der allgemeinen Formel Z¹-X-CO-NH-R¹-NH-CO-X-Z¹ mit Z¹ gleich oder verschieden sowie
iv) 0 bis 8 Gew.-% Urethan der allgemeinen Formel Y-O-CO-NH-R¹-NCO.

Die nach dem erfindungsgemäßen Verfahren hergestellten Additivkompositionen (für den Einsatz vorgesehene "technische" Phosphorsäurederivate mit ggf. charakteristischen "Nebenprodukten") enthalten häufig jeweils entsprechend geringe Mengen Diurethan und Diharnstoff. Derartig geringe Mengen des Diurethans bzw. des Diharnstoffs verursachen im Regelfall keine registrierbare Verschlechterung bezüglich eines Einsatzes als Netz- und Dispergiermittel und sind ein deutlicher Hinweis darauf, dass die Additivkomposition mit dem erfindungsgemäßen Verfahren hergestellt worden ist. Durch den Einsatz entsprechender Mengen des Amins im zweiten Schritt des erfindungsgemäßen Verfahrens kann der Anteil des Urethans der allgemeinen Formel Y-O-CO-NH-R¹-NCO in der Regel zumindest fast gegen Null reduziert werden, was für die Qualität der erfindungsgemäßen Additivkompositionen meist vorteilhaft ist. Die erfindungsgemäße Additivkomposition ist umweltfreundlich, gut lagerfähig und zeigt - entsprechend wie die erfindungsgemäßen Phosphorsäurederivate als solches - ausgezeichnete Eigenschaften als Netz- und Dispergiermittel. Weitere Komponenten der erfindungsgemäßen Additivkomposition können beispielsweise Lösemittel oder Lithiumsalze sein.

Darüber hinaus betrifft die vorliegende Erfindung die Verwendung der vorstehend beschriebenen Phosphorsäureesterderivate und/oder der vorstehend beschriebenen Additivkomposition als Additiv, insbesondere als Netz- und Dispergiermittel, in Beschichtungen, insbesondere Lacken, Kunststoffen, Pigmentpasten, Dichtstoffen, Keramik, Kosmetika, Klebstoffen, Vergussmassen, Spachtelmassen, Druckfarben und Tinten.

Weiterhin betrifft die vorliegende Erfindung ein Feststoffgemenge, welches Partikel und/oder Fasern enthält, die mit den vorstehend beschriebenen Phosphorsäureesterderivaten und/oder vorstehend beschriebenen Additivkomposition behandelt worden sind.

Schließlich betrifft die Erfindung auch einen Lack oder Kunststoff, welcher die vorstehend beschriebenen Phosphorsäureesterderivate und/oder die vorstehend beschriebene Additivkomposition enthält.

Die erfindungsgemäßen Phosphorsäureesterderivate finden beispielsweise als Aluminiumpassivator, Dispergiermittel, Dispersionsstabilisatoren oder Netzmittel Verwendung und lassen sich beispielsweise in pigmentierten und/oder füllstoffhaltigen Produkten, beispielsweise Pigmentkonzentraten oder -pasten, Beschichtungszusammensetzungen, Dichtstoffen, Kunststoffen, Keramiken, Kosmetika, Klebstoffen, Vergussmassen, Spachtelmassen, Druckfarben und/oder Tinten einsetzen. Bevorzugt sind Pigmentkonzentrate, die mit entsprechenden Auflacksystemen gemischt werden können, wodurch pigmentierte Lacke hergestellt werden.

So können diese beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, Kleb- und Dichtstoffen, Vergussmassen, Kunststoffen und kosmetischen Zubereitungen eingesetzt werden, insbesondere, wenn diese Feststoffe wie Pigmente und/oder Füllstoffe enthalten. Auch bei der Herstellung oder Verarbeitung von Formmassen auf Basis von synthetischen, halbsynthetischen oder natürlichen makromolekularen Stoffen, wie Polyvinylchlorid, gesättigten oder ungesättigten Polyestern, Polyurethanen, Polystyrolen, Polyacrylaten, Polyamiden, Epoxidharzen, Polyolefinen, wie Polyethylen oder Polypropylen, können diese eingesetzt werden. Beispielsweise lassen sich die Verbindungen zur Herstellung von Vergussmassen, Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings oder Maler- und Bautenlacken verwenden.

Die erfindungsgemäßen Phosphorsäureesterderivate können nicht nur in Auflacksystemen für pigmentierte Lacke eingesetzt werden. Ebenfalls möglich ist der Einsatz in einem weiten Bereich von Formulierungen bzw. Produkten, wie Harzen, Ölen, Fetten, Gleitmitteln, Gummimaterialien, Dichtstoffen, Druckfarben, Tinten, Klebstoffen, Wachsen oder Beschichtungsmittelzusammensetzungen. Die Konzentrate können auch eingesetzt werden in Formulierungen, die in der Körperpflegeindustrie hergestellt werden oder in elektrischen Anwendungen in der Elektronikindustrie, in der Schiffsindustrie, im Rahmen medizinischer Anwendungen, in der Bauindustrie oder in der Automobilindustrie. Beispiele schließen elektronisches Papier, wie das Display bei E-Books, die Verkapselung mikroelektronischer Chips und Leiterplatten, Unterwasserbootshautbeschichtungen, wie Anti-Fouling-Beschichtungen, Silikonröhren oder Gleitadditive für Bremskomponenten ein.

Die erfindungsgemäßen Phosphorsäureesterderivate können vorteilhaft auch bei der Herstellung von Farbfiltern für Flüssigkristallanzeigen, Flüssigkristallbildschirme, Farbauflösungsgeräte, Sensoren, Plasmabildschirmen, Anzeigen auf Basis der SED (Surface conduction Electron emitter Display) und für MLCC (Multi Layer Ceramic Compounds) eingesetzt werden. Die MLCC-Technotogie wird bei der Herstellung von Mikrochips und Leiterplatten angewendet.

Die Verwendung in kosmetischen Präparaten kann beispielsweise zur Herstellung kosmetischer Zubereitungen wie Make-up, Puder, Lippenstifte, Haarfärbemittel, Cremes, Nagellacke und Sonnenschutzpräparaten dienen. Diese können in den üblichen Formen, beispielsweise als W/O- oder O/W-Emulsionen, Lösungen, Gele, Cremes, Lotionen oder Sprays vorliegen. Die erfindungsgemäßen Verbindungen können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, wie organische und anorganische Pigmente, wie Titandioxid oder Eisenoxid, enthalten.

Zu nennen sind ebenfalls die Anwendungsbereiche NIP (Non impact printing), InkJet (auf Papier, Folie, Keramik, künstlichem und natürlichem Fasergewebe), Dispergieren von Keramik (wässrig oder wasserfrei), Dispergieren in Vergussmassen. Die erfindungsgemäßen Phosphorsäureesterderivate können auch als solches, d.h. ohne zuvor in ein entsprechendes Konzentrat eingearbeitet worden zu sein, in den zuvor genannten Formulierungen und Anwendungsbereichen zum Einsatz kommen.

Typischerweise ist das Phosphorsäureesterderivate sowie Pigment- und/oder Füllstoffe enthaltende Produkt ein Lack, oder ein Pigmentkonzentrat für Beschichtungszusammensetzungen. Letztlich aber ist der Einsatz der Phosphorsäureesterderivate in beliebigen pigmenthaltigen und/oder füllstoffhaltigen Produkten möglich.

Insbesondere handelt es sich bei den Pigmentkonzentraten um Zusammensetzungen, die neben dem erfindungsgemäßen Phosphorsäureesterderivaten beispielsweise organische Lösemittel und mindestens ein Pigment enthalten. Diese enthalten insbesondere keine oder nur geringe Anteile organischer Polymere als Bindemittel. Solche bekannten Bindemittel sind vorteilhafterweise in den entsprechenden Auflacksystemen vorhanden und werden nachstehend beschrieben.

Als organische Lösemittel kommen insbesondere die typischen im Bereich der Lack- und Farbindustrie eingesetzten, dem Fachmann bekannten organischen Lösemittel, wie aliphatische Lösemittel, cycloaliphatische Lösemittel, aromatische Lösemittel, wie Toluol, Xylol, Solventnaphtha, Ether, Ester und/oder Ketone, beispielsweise Butylglykol, Butyldiglykol, Butylacetat, Methylisobutylketon, Methylethylketon und/oder Lösemittel, wie Methoxypropylacetat, Diacetonalkohol, zum Einsatz.

Als Pigmente kommen die dem Fachmann bekannten Pigmente zu Einsatz. Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-Pigmente, Triarylmethan-Pigmente, Xanthen-Pigmente, Acridin-Pigmente, Chinacridon-Pigmente, Methin-Pigmente, Anthrachinon, Pyranthron-, Perylen-Pigmente und andere polycyclische Carbonylpigmente, anorganische Pigmente, wie Carbon Black Pigmente und/oder Pigmente auf Basis von Russ, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismutvanadat-molybdatgelb oder Chromtitangelb), magnetischen Pigmenten auf Basis von Reineisen, Eisenoxiden und Chromoxiden oder Mischoxiden, Metalleffektpigmente aus Aluminium, Zink, Kupfer oder Messing sowie Perlglanzpigmente oder fluoreszierende und phosphoreszierende Leuchtpigmente. Weitere Beispiele sind nanoskalige organische oder anorganische Feststoffe mit Teilchengrößen unterhalb von 100 nm in mindestens einer Dimension, wie bestimmte Russtypen oder andere allotrope Formen des Kohlenstoffs, wie single-wall-CNT's, multi-wall-CNT's und Graphen. Die Bestimmung der Teilchengröße erfolgt bspw. mittels Transmissionselektronenmikroskopie, analytischer Ultrazentrifugation oder Methoden der Lichtstreuung. Ebenfalls zu nennen sind Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie bsp. Ionenaustauschprozesse, Plasmaprozesse, Sol-Gel-Verfahren, Ausfällung, Zerkleinerung (beispielsweise durch Vermahlung) oder Flammhydrolyse erfolgen. Alle vorstehend genannten Pigmente können oberflächenmodifiziert vorliegen und basische, saure oder neutrale Gruppen an der Oberfläche besitzen.

Enthalten die jeweiligen Produkte, insbesondere die Beschichtungszusammensetzungen, Füllstoffe, so handelt es sich z.B. um die dem Fachmann bekannten Füllstoffe. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Die eingesetzten Fasern können organischer und/oder anorganischer Natur sein und ebenso als Verstärkungsstoffe eingesetzt werden. Weitere Beispiele für Pigmente oder Füllstoffe finden sich beispielsweise in der US-A-4,795,796. Auch Flammschutzmittel, sofern die erfindungsgemäßen Verbindungen nicht bereits in üblichen Additivmengen für diesen Zweck eingesetzt werden, wie Aluminium- oder Magnesiumhydroxid und Mattierungsmittel, wie Kieselsäuren, lassen sich ebenfalls besonders gut durch die erfindungsgemäßen Netz- und Dispergiermittel dispergieren und stabilisieren.

Die erfindungsgemäßen Phosphorsäureesterderivate eignen sich insbesondere auch zur Herstellung von Feststoffkonzentraten, wie Pigmentkonzentraten. Dazu werden die erfindungsgemäßen Phosphorsäureesterderivate in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Phosphorsäureesterderivaten ist es aber insbesondere möglich, stabile bindemittelfreie Pigmentkonzentrate herzustellen. Ebenso ist es möglich, mit den erfindungsgemäßen Phosphorsäureesterderivaten fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Verbindung zugemischt und die so erhaltene Mischung dispergiert. Die auf verschiedenen Wegen hergestellten Feststoffkonzentrate können dann in unterschiedliche Substrate wie z.B. Alkydharze, Polyesterharze, Acrylatharze, Polyurethanharze oder Epoxidharze eingearbeitet werden. Pigmente können aber auch lösemittelfrei direkt in den erfindungsgemäßen Phosphorsäureesterderivaten dispergiert werden und eignen sich dann besonders zur Pigmentierung von thermoplastischen und duroplastischen Kunststoffformulierungen.

Je nach Einsatzgebiet werden die erfindungsgemäßen Phosphorsäureesterderivate in solchen Mengen eingesetzt, dass in dem letztlich für die weitere Anwendung interessanten Produkt vorteilhaft ein Anteil des erfindungsgemäßen Netz- und Dispergiermittels von 0,01 bis 10 Gew.-%, bezogen auf die Gesamtmenge des jeweiligen Produkts, besteht. Möglich sind aber auch höhere Anteile.

Bezogen auf den zu dispergierenden Feststoff, beispielsweise das Pigment, wird das erfindungsgemäße Netz- und Dispergiermittel in einer Menge von bevorzugt 0,5 bis 100 Gew.-% eingesetzt. Werden schwer zu dispergierende Feststoffe verwendet, kann die Menge an eingesetztem erfindungsgemäßen Netz- und Dispergiermittel durchaus höher sein. Die Menge an Dispergiermittel ist im Allgemeinen abhängig von der zu belegenden Oberfläche des zu dispergierenden Stoffes. Von Bedeutung kann also beispielsweise sein, um welches Pigment es sich handelt. Allgemein lässt sich sagen, dass zur Dispergierung anorganischer Pigmente meist weniger Dispergiermittel notwendig ist als für organische Pigmente, da letztere meist über eine höhere spezifische Oberfläche verfügen und von daher eine größere Menge an Dispergiermittel nötig ist. Typische Dosierungen des Netz- und Dispergiermittels für anorganische Pigmente liegen beispielsweise bei 1 bis 20 Gew.-%, für organische Pigmente bei 10 bis 50 Gew.-%, jeweils bezogen auf den zu dispergierenden Feststoff, insbesondere das Pigment. Bei sehr feinteiligen Pigmenten (beispielsweise einigen Rußen) sind auch Zugabemengen von 30 bis 90% oder mehr nötig. Als Kriterien für eine ausreichende Pigmentstabilisierung können beispielsweise Glanz und Transparenz der Beschichtungszusammensetzungen oder der Grad des Ausschwimmens herangezogen werden. Die Dispergierung der Feststoffe kann als Einzelanreibung erfolgen oder auch als Gemischanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen Phosphorsäureesterderivate häufig eine gleichnamige, in der Regel positive, Ladung aller Teilchen erreichen und damit Instabilitäten durch Ladungsunterschiede vermeiden. Ihre optimale Wirkung erzielen die Dispergiermittel bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die erfindungsgemäßen Phosphorsäureesterderivate auch nachträglich eingesetzt werden (als sogenannte "Post-Additive"), zum Beispiel um in einem fertig aufgelackten Ansatz Ausschwimm- oder Flockulationsprobleme zu lösen. In der Regel sind in diesem Fall aber erhöhte Additiv-Dosierungen erforderlich.

Die Produkte, insbesondere die Beschichtungszusammensetzungen beziehungsweise Lacke, in denen die erfindungsgemäßen Phosphorsäureesterderivate letztlich ihre Wirkungen entfalten sollen, können zudem ein organisches Polymer als Bindemittel enthalten. Solche Bindemittel sind dem Fachmann bekannt. Dieses mindestens eine Bindemittel kann beispielsweise über ein Auflacksystem eingeführt werden, welches beispielsweise mit einem Pigmentkonzentrat, enthaltend die erfindungsgemäßen Phosphorsäureesterderivate, gemischt wird, so dass es sich bei dem betrachteten Produkt um einen pigmentierten Lack handelt. Möglich sind aber auch andere pigmentierte und/oder füllstoffhaltige Produkte, beispielsweise Kunststoffe, Dichtstoffe und weitere dem Fachmann bekannte Produkte auf Basis einer organischen polymeren Matrix. Als Produkt ist ein System anzusehen, welches ein polymeres Harz beziehungsweise organisches Polymer als Bindemittel enthält und dadurch in der Lage ist, unter geeigneten Härtungsbedingungen eine feste organische, polymere Matrix zu bilden (beispielsweise eine Beschichtungszusammensetzung). Ebenfalls als Produkt wird ein System bezeichnet, dass durch einfache Vermischung mit einer Komponente, welche ein Bindemittel enthält, zur Bildung einer solchen organischen, polymeren Matrix fähig ist (beispielsweise ein Pigmentkonzentrat). Zum Einsatz kommen beispielsweise, aber nicht ausschließlich die dem Fachmann bekannten Alkydharze, Polyesterharze, Acrylatharze, Polyurethanharze, Cellulosenitrate, Celluloseacetobutyrate, Melamine, Chlorkautschuken und/oder Epoxidharze. Beispiele für Beschichtungen auf Wasserbasis sind kathodische oder anodische Elektrotauchlackierungen z.B. für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Möglich sind sowohl 1-Komponentensysteme als auch 2-Komponentensysteme, wobei im letzteren Fall in der Regel noch Polyisocyanate, Melaminharze und/oder Polyamidharze als die typischen, dem Fachmann geläufigen Vernetzungsmittel in einer zweiten Komponente vorhanden sind. Bevorzugt sind Produktssysteme, insbesondere Beschichtungszusammensetzungen, die eine Acrylatharz als Bindemittel enthalten. In einer weiteren Variante handelt es sich um eine 2-Komponenten (2K) Beschichtungszusammensetzung bzw. einen 2K-Lack, der ein Epoxidharz in der Bindemittelkomponente und ein Polyamidharz in der Vernetzerkomponente enthält.

Die als Produkte bevorzugten Beschichtungszusammensetzungen können wasserbasierend oder lösemittelbasierend sein. Unter wasserbasierend ist zu verstehen, dass die Beschichtungszusammensetzung als Lösemittel hauptsächlich Wasser enthält. Insbesondere sind bei einer wasserbasierenden Beschichtungszusammensetzung nicht mehr als 10 Gew.-% organische Lösemittel, bezogen auf die Gesamtmenge an Lösemitteln, in der Beschichtungszusammensetzung enthalten. Als lösemittelbasierend gilt eine Beschichtungszusammensetzung, die nicht mehr als 5 Gew.-%, bevorzugt nicht mehr als 2 Gew.-% Wasser, bezogen auf die Gesamtmenge an Lösemitteln enthält.

Als weitere Produktkomponenten kommen beispielsweise in Frage Photoinitiatoren, Entschäumer, Netzmittel, filmbildende Hilfsmittel, wie Cellulose-Derivate (beispielsweise Cellulosenitrate, Celluloseacetate, Celluloseacetobutyrat), Reaktiwerdünner, Verlaufmittel, Dispergiermittel, und/oder rheologiesteuernde Additive.

Die Herstellung der als Produkte bevorzugten Pigmentkonzentrate und Beschichtungszusammensetzung erfolgt über die dem Fachmann geläufigen Verfahren. Es kommen die bekannten Methoden zum Einsatz, wie beispielsweise die schrittweise Zugabe unter Rühren und Vermischung der Bestandteile der Beschichtungszusammensetzung in üblichen Mischaggregaten, wie Rührkessel oder Dissolver.

Unter Verwendung der bevorzugten Pigmentkonzentrate und Beschichtungszusammensetzungen können Beschichtungen bzw. Lackschichten hergestellt werden. Die Herstellung der Beschichtung erfolgt über die dem Fachmann geläufigen Applikationstechniken auf ein Substrat und anschließende Härtungsverfahren.

Die Applikation erfolgt beispielsweise durch die bekannten Spritz-, Sprüh-, Streich-, Roll-, Giess-, Tränk- und/oder Tauchverfahren. Nach der Applikation der Beschichtungszusammensetzung auf ein Substrat erfolgt die Härtung beziehungsweise Trocknung nach gängigen Methoden. Z.B. kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10°C bis etwa 400 °C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungszusammensetzung und/oder den Substraten abhängig. Dabei kann das Substrat bewegt werden oder auch ruhen.

Neben der oben beschriebenen Anwendung als Dispergiermittel und/oder Beschichtungsmittel für pulver- und faserförmige Feststoffe können die erfindungsgemäßen Phosphorsäureesterderivate auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der US-A-4,777,195 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht mit den verwendeten ungesättigten Polyesterharzen verträglich und es kommt zur Separation der Komponenten. Bei Verwendung von PS-gefüllten SMC- oder BMC-Mischungen können die erfindungsgemäßen Phosphorsäureesterderivate aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Mittels der erfindungsgemäßen Phosphorsäureesterderivate können z.B. in unverträglichen Polyol-Mischungen, Polyol-Isocyanat-Mischungen oder Polyol-Treibmittelmischungen (werden z.B. bei der Polyurethan-Herstellung eingesetzt) Phasenvermittlungseffekte erzielt werden.

Die Erfindung soll nachstehend anhand von Beispielen zusätzlich erläutert werden.

### BEISPIELE

Bei molekular uneinheitlichen Substanzen stellen die angegebenen Molekulargewichte Durchschnittswerte des Zahlenmittels dar. Die Molekulargewichte beziehungsweise zahlenmittleren Molekulargewichte Mₙ werden bei Vorhandensein titrierbarer Hydroxy- oder Amino-Gruppen durch Endgruppenbestimmung über die Ermittlung der OH-Zahl beziehungsweise der Amin-Zahl bestimmt. Bei Verbindungen auf die eine Endgruppenbestimmung nicht anwendbar ist wird das zahlenmittlere Molekulargewicht mittels Gelpermeationschromatographie gegen einen Polystyrolstandard bestimmt.

Sofern nicht anders ausgeführt, handelt es sich bei Angaben in Teilen um Gewichtsteile und bei Angaben in Prozenten um Gewichtsprozente.

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5, 1977.

### Herstellung des Polyether-Polyesters Y1, Mn 780

350 g MPEG 350 -Caprolacton und 1 g DBTL
(Dibutylzinndilaurat)□(Methoxypolyethylengtykol, Mn 350), 434 g werden bei 160 °C zur Reaktion gebracht bis ein Festkörper von > 95 % erreicht ist.
Die OH-Zahl des Reaktionsproduktes beträgt 72 mg KOH/g.

### Herstellung eines siloxanhaltigen epsilon-Caprolacton-Polyesters Y2, Mn 2800

35 g eines alpha,omega-hydroxyalkylfunktionellen Dimethylpolysiloxans mit einem Gesamtmolekulargewicht von ca. 900 g/mol werden mit 75 g epsilon-Caprolacton zur Reaktion gebracht. Hierzu lässt man das Gemisch unter Zusatz von 0,035 g DBTL bei 160°C in einer N2-Atmosphäre ca. 8 Stunden reagieren. Die Reaktion ist beendet, wenn der Gehalt an nichtflüchtigen Anteilen grösser als 98 % ist. Das alpha,omega-hydroxyalkylfunktionelle Dimethylpolysiloxan als Startalkohol gewinnt man in dem Fachmann bekannter Weise, durch Addition von geeigneten ungesättigten Alkoholen (wie z. B. der, in diesem Beispiel verwendete Allylalkohol) an Dimethylpolysiloxane, die endständige Silaneinheiten tragen.

Die weiteren als Y-OH verwendeten hydroxyfunktionellen Polyester werden auf analoge Weise hergestellt.

### Allgemeine Herstellvorschrift der Monoaddukte:

In einem mit Rührer, Thermometer, Tropftrichter, Rückflusskühler und Stickstoffeinleitungsrohr versehenen Vierhalskolben werden 430 g Desmodur T 100 (ca. 100% 2,4-Toluylendiisocyanat, NCO-Gehalt = 48,8) und 7g Benzoylchlorid vorgelegt und gut durchmischt. X g der Alkoholkomponente, die wasserfrei und bei Polyethern alkalifrei ist, werden langsam zudosiert, so dass die Temperatur 55 °C nicht übersteigt. Das Gemisch wird nach der Zudosierung weitere 3 Stunden bei 55°C gerührt. Das überschüssige TDI wird mittels Dünnschichtverdampfer bei 150 °C aus dem Reaktionsgemisch entfernt. Der Rest-TDI-Gehalt beträgt < 1 %.

| Monoaddukt | Alkoholkomponente | Menge X in [g] |
|---|---|---|
| **M1** | Butanolgestarteter PO-Polyether Mn 800, OH-Zahl: 70 mg KOH/g | 800 |
| **M2** | MPEG 350, OH-Zahl: 162 mg KOH/g | 350 |
| **M3** | Butanolgestarteter EO/PO-Polyether (EO:PO 1:1) Mn 2240, OH-Zahl: 25 mg KOH/g | 2240 |
| **M4** | Polyester Y1, OH-Zahl: 72 mg KOH/g | 780 |
| **M5** | Hexadecanolgestarteter Monohydroxyfunktioneller ε-Caprolactonpolyester, Mn 600 | 600 |
| **M6** | Hexadecanolgestarteter Monohydroxyfunktioneller ε-Caprolactonpolyester, Mn 1200 | 1200 |
| **M7** | MPEG 500 = Methoxypolyethylenglykol, Mn 500 | 500 |
| **M8** | Butanolgestarteter EO/PO-Polyether (EO:PO 1:1) Mn 1100 | 1100 |
| **M9** | B11/50 = Butanolgestarteter EO/PO-Polyether (EO:PO 1:1) Mn 1700 | 1700 |
| **M10** | Butanolgestarteter EO/PO-Polyether (EO:PO 1:1) Mn 2000 | 2000 |
| **M11** | Butanolgestarteter EO/PO-Polyether (EO:PO 1:1) Mn 3100 | 3100 |
| **M12** | Butanolgestarteter EO/PO-Polyether (EO:PO 1:1) Mn 4800 | 4800 |
| **M13** | Hydroxyethylacrylatgestarteter ε-Caprolactonpolyester, Mn 1200 | 1200 |
| **M14** | Monohydroxyfunktionelles Hydroxypropyl-polydimethylsiloxan mit Butylendgruppe, Mn 1200 | 1200 |
| **M15** | Methanolgestarteter EO/PO-Polyether (EO:PO 3:1), Mn 1400 | 1400 |
| **M16** | MPEG 500-gestarteter ε-Caprolactonpolyester Mn 900 | 900 |
| **M17** | iso-Decanolgestarteter ε-Caprolactonpolyester Mn 700 | 700 |
| **M18** | iso-Decanolgestarteter ε-Caprofactonpolyester Mn 1000 | 1000 |
| **M19** | Monophenylglykolgestarteter ε-Caprolactonpolyester Mn = 1200 | 1200 |
| **M20** | n-Butanolgestarteter ε-Caprolactonpolyester, Mn = 600 | 600 |
| **M21** | n-Butanolgestarteter ε-Caprolactonpolyester, Mn = 1200 | 1200 |
| **M22** | Butanolgestarteter PO-Polyether, Mn 1100 | 1100 |
| **M23** | iso-Decanolgestarteter Polyester aus ε-Caprolacton und δ-Valerolacton im molaren Verhältnis 3:1, Mn = 2000 | 2000 |
| **M24** | B11/50-gestarteter ε-Caprolactonpolyester, mittleres Molekulargewicht Mn = 2000 | 2000 |
| **M25** | MPEG 350-gestarteter ε-Caprolactonpolyester Mn 900 | 900 |
| **M26** | MPEG 350-gestarteter Polyester aus ε-Caprolacton und δ-Valerolacton im molaren Verhältnis 3:1, Mn = 950 | 950 |
| **M27** | MPEG 500-gestarteter Polyester aus ε-Caprolacton und δ-Valerolacton im molaren Verhältnis 3:1, Mn = 1100 | 1100 |
| **M28** | MPEG 750-gestarteter Polyester aus ε-Caprolacton und δ-Valerolacton im molaren Verhältnis 3:1, Mn = 1400 | 1400 |
| **M29** | MPEG 750 | 750 |
| **M30** | ε-Caprolactonpolyester Mn 1600, gestartet mit einem methanolgestarteten EO/PO-Polyether (EO:PO 3:1), Mn 1400 | 1600 |
| **M31** | Butanolgestarteter EO/PO-Polyether (EO:PO 1:1) Mn 3170 | 3170 |
| **M32** | Butanolgestarteter EO/PO-Polyether (EO:PO 1:1) Mn 2540 | 2540 |
| **M33** | Butanolgestarteter PO-Polyether, Mn 2240 | 2240 |
| **M34** | Butanolgestarteter Butylenoxid-Polyether, Mn 960 | 960 |
| **M35** | Alpha,omega-Dihydroxyfunktionelles Hydroxypropyl-polydimethylsiloxan, Mn 1800 | 1800 |
| **M36** | Y2, Dihydroxyfunktioneller ε-Caprolactonpolyester Mn 2800, gestartet mit einem alpha,omega-dihydroxyfunktionellen Hydroxypropyl-polydimethylsiloxan, Mn 900 | 2800 |
| **M37** | Oleylalkohol | 268 |
| **M38** | Monophenylglykol | 138 |
| **M39** | Isotridecylalohol | 200 |
| **M40** | n-Decanol | 158 |
| **M41** | Isodecanol | 158 |
| **M42** | Benzylalkohol | 108 |
| **M43** | Cyclohexanol | 100 |
| **M44** | Isobutanol | 74 |
| **M45** | Polyethylenglykol (dihydroxyfunktionell), Mn 600 | 300 |
| **M46** | Polyethylenglykol (dihydroxyfunktionell), Mn 1000 | 500 |
| **M47** | Dipropylenglykolmonomethylether | 148 |
| **M48** | Butyltriglykol | 206 |

### Allgemeine Vorschrift zur Umsetzung der Monoaddukte mit Aminen und Polyphosphorsäure zu Monoadduktharnstoffen:

In einem mit Rührer, Thermometer, Tropftrichter, Rückflusskühler und Stickstoffeinleitungsrohr versehenen Vierhalskolben werden x g Monoaddukt vorgelegt und unter Rühren langsam y g Aminoalkohol über 1 h zugetropft. Hierbei soll die Reaktionstemperatur nicht 50°C übersteigen. Nach einer Stunde wird die Temperatur auf 80°C erhöht und z g Polyphosphorsäure zugegeben. Die Reaktion ist nach 3 Stunden bei 80°C beendet. Gegebenenfalls kann während oder nach der Reaktion mit MPA verdünnt werden.

| **Beispiel** | **Monoaddukt** | **Aminoalkohol** | **Polyphosphor säure in [g]** |
|---|---|---|---|
| **P1** | 100g M1 | 6,9 g EA | 12,7 |
| **P2** | 100g M2 | 9,9 g EA | 16,4 |
| **P3** | 852g M25 | 61g EA | 85 |
| **P4** | 852g M25 | 105g DEA | 170 |
| **P5** | 1150g M26 | 61g EA | 85 |
| **P6** | 1150g M26 | 105g DEA | 170 |
| **P7** | 1150g M26 | 105g AEE | 85 |
| **P8** | 1072g M16 | 61g EA | 85 |
| **P9** | 1072g M16 | 105g DEA | 170 |
| **P10** | 1072g M16 | 105g DEA | 85 |
| **P11** | 1274g M27 | 105g DEA | 170 |
| **P12** | 1574g M15 | 105g DEA | 170 |
| **P13** | 1574g M28 | 105g DEA | 170 |
| **P14** | 1274g M8 | 105g DEA | 170 |
| **P15** | 974g M1 | 105g DEA | 170 |
| **P16** | 924g M29 | 105g DEA | 170 |
| **P17** | 1774g M30 | 105g DEA | 170 |
| **P18** | 4974g M12 | 105g DEA | 170 |
| **P19** | 4974g M12 | 105g DEA | 85 |
| **P20** | 4974g M12 | 144g TEA | 170 |
| **P21** | 3344g M31 | 105g DEA | 170 |
| **P22** | 2714g M32 | 105g DEA | 170 |
| **P23** | 2414g M33 | 105g DEA | 170 |
| **P24** | 1134g M34 | 105g DEA | 170 |
| **P25** | 2414g M3 | 105g DEA | 170 |
| **P26** | 954g M4 | 105g DEA | 170 |
| **P27** | 770g M5 | 105g DEA | 170 |
| **P28** | 1370g M6 | 105g DEA | 170 |
| **P29** | 670g M7 | 105g DEA | 170 |
| **P30** | 1170g M8 | 61g EA | 85 |
| **P31** | 1870g M9 | 105g DEA | 170 |
| **P32** | 2170g M10 | 105g DEA | 170 |
| **P33** | 3270g M11 | 105g DEA | 170 |
| **P34** | 5000g M12 | 61g EA | 85 |
| **P35** | 1370 M13 | 105g DEA | 170 |
| **P36** | 1370 M14 | 105g DEA | 170 |
| **P37** | 870g M17 | 105g DEA | 170 |
| **P38** | 1170g M18 | 105g DEA | 170 |
| **P39** | 1370g M19 | 105g DEA | 170 |
| **P40** | 770g M20 | 105g DEA | 170 |
| **P41** | 1370g M21 | 105g DEA | 170 |
| **P42** | 1270g M22 | 105g DEA | 170 |
| **P43** | 2170g M23 | 105g DEA | 170 |
| **P44** | 2170g M24 | 105g DEA | 170 |
| **P45** | 2148g M35 | 105g DEA | 170 |
| **P46** | 3148g M36 | 105g DEA | 170 |
| **P47** | 442g M37 | 61g EA | 85 |
| **P48** | 312g M38 | 105g DEA | 170 |
| **P49** | 374g M39 | 61g EA | 85 |
| **P50** | 332g M40 | 61g EA | 85 |
| **P51** | 332g M41 | 61g EA | 85 |
| **P51** | 282g M42 | 61g EA | 85 |
| **P53** | 274g M43 | 61g EA | 85 |
| **P54** | 248g M44 | 105g DEA | 170 |
| **P55** | 474g M45 | 105g DEA | 170 |
| **P56** | 674g M46 | 105g DEA | 170 |
| **P57** | 332g M47 | 105g DEA | 170 |
| **P58** | 380g M48 | 105g DEA | 170 |

| | | | |
|---|---|---|---|
| EA = Ethanolamin; DEA = Diethanolamin; AEE = 2-(2-Aminoethoxy)ethanol TEA = Triethanolamin | | | |

### Herstellung eines nicht erfindungsgemäßen Vergleichsbeispiels PX1

950g eines MPEG 350-gestarteten Polyesters aus ε-Caprolacton und δ-Valerolacton im molaren Verhältnis 3:1, Mn = 950 und 85 g Polyphosphorsäure werden 3 Stunden bei 80°C gerührt.

### Herstellung eines nicht erfindungsgemäßen Vergleichsbeispiels PX2

950g eines butanolgestarteten EO/PO-Polyethers (EO:PO 1:1), Mn 4800 und 85 g Polyphosphorsäure werden 3 Stunden bei 80°C gerührt.

### Allgemeine Vorschrift zur Salzbildung:

In einem mit Rührer, Thermometer, Tropftrichter, Rückflusskühler und Stickstoffeinleitungsrohr versehenen Vierhalskolben wird der Monoadduktharnstoff in 40 g MPA und 40 g Butylglycol mit x g Versalzungsreagenz 1 h bei 60 °C gerührt.

| **Beispiel** | **Eingesetzte Verbindung** | **Versalzungsreagenz** |
|---|---|---|
| **S1** | 1377g P9 | 234g DEEA |
| **S2** | 1377g P9 | 178 g DMEA |
| **S3** | 1377g P9 | 346g N,N-Dibutylethanolamin |
| **S4** | 1277g P10 | 117g DEEA |
| **S5** | 1480g P11 | 149g TEA |
| **S6** | 1570g P14 | 1400g Copolymer1 |
| **S7** | 1280g P15 | 1600g Copolymer2 |
| **S8** | 5280g P18 | 1400g Copolymer1 |
| **S9** | 5280g P18 | 1600g Copolymer2 |
| **S10** | 5180g P19 | 700g Copolymer1 |
| **S11** | 5180g P19 | 800g Copolymer2 |
| **S20** | 685g P47 | 700 Copolymer1 |
| **S21** | 520g P49 | 700g Copolymer1 |
| **S22** | 2445g P43 | 1400g Copolymer1 |
| **S23** | 2445g P43 | 700g Copolymer1 |

| | | |
|---|---|---|
| *DEEA = N,N-Diethylethanolamin; DMEA = N,N-Dimethylethanolamin* | | |

### Copolymer 1 (basisches GTP-Blockcopolymer)

In einem Dreihalskolben mit Rührer, Rückflusskühler und Gaseinlass werden unter Stickstoff-Strom 69,70 g MPA bei 20°C vorgelegt und mit 7,70 g Butylmethacrylat vermischt. Dann werden 3,75 g 1-Trimethylsiloxy-1-methoxy-2- methylpropen und 0,375 g Tetrabutylammonium-m-chlorbenzoat mittels Spritze durch ein Septum zugegeben. Innerhalb von 30 min werden 60,00 g Butylmethacrylat zudosiert. Die Reaktionstemperatur steigt bis auf 40 °C und wird durch Kühlung auf diesem Niveau gehalten. Nach der Zugabe von Butylmethacrylat werden 32,80 g N,N-Dimethylaminoethylmethacrylat innerhalb von 20 min zudosiert, wobei durch Kühlung wieder sichergestellt wird, dass die Temperatur nicht über 40 °C steigt. Nach 30 min Rühren werden 3 ml Ethanol hinzugegeben. Die Monomere wurden vollständig umgesetzt (Restmonomergehalt bestimmt mittels HPLC); Produkt: Mₙ=9100 g/mol gemäß GPC.

### Copolymer 2 (basisches NMP-Blockcopolymer)

In einem Dreihalskolben mit Rührer, Rückflusskühler und Gaseinlass werden unter Stickstoff-Strom 47,2 g MPA und 3,81g 2-[N-tert-butyl-N-[1 - diethylphosphono-(2,2-dimethylpropyl)]nitroxy]-2-methylpropansäure sowie 46,00 g Butylacrylat in einen Dreihalsrundkolben vorgelegt und auf 120 °C erwärmt. Man rührt noch 2,5 h bei 120 °C. Im Anschluss werden 21 ,00 g N,N-Dimethylaminoethylmethacrylat mit einer Rate von 2 ml/min zudosiert. Hiernach wird weitere 6 h bei 120 °C gerührt; der Umsatz beträgt hiernach über 98% (Restmonomergehalt bestimmt mittels HPLC); Produkt: Mₙ=3000 g/mol gemäß GPC.

### c) Anwendungstechnische Abprüfung

### Verwendung der erfindungsgemäßen Polymere als Netz- und Dispergiermittel zur Herstellung von Pigmentkonzentraten und deren Einsatz in Lacksystemen

**Ausgangsstoffe**

| | |
|---|---|
| Uralac SN 831 | ***Polyesterharz*,** Hersteller ***DSM*** Resins |
| Cymel 303 | ***Melamin***-Formaldehyd-***Harz***, Hersteller Cytec Industries |
| Dynapol Catalyst 1203 | Katalysator, Hersteller ***Evonik*** Degussa |
| Ti Pure R960 | Titandioxid-Pigment, Hersteller Du Pontrosil R972 |
| Aerosil R972 | Hydrophobe, pyrogene Kieselsäure, Hersteller Degussa |
| BYK 057 | Silikonfreier Polymer-Entschäumer von BYK-Chemie |
| BYK 355 | Acrylatverlaufadditiv, Hersteller BYK-Chemie |
| Solvesso 150 ND, | |
| Solvesso 100 | Aromatische Lösemittel von ExxonMobil |
| MPA | 1-Methoxy-2-propylacetat |

### Arbeitsverfahren

### Herstellung der Lacke

### Mahlbedingungen:

Gerät: Lau Paint Shaker DAS H [/A]200-K
Mahlzeit: 60 min, normale Geschwindigkeit, maximale Kühlung Verhältnis Mahlgut zu Glasperlen (1 mm Durchmesser): 1 : 1 (Gewichtsteile)

**Zusammensetzung der Pigmentkonzentrate:**

| | **Ti pure R960** | **Special black 4** |
|---|---|---|
| | | |
| Uralac SN831 | 26.2 | 44.0 |
| Additive | 1.7 | 3.6 |
| MPA | 5.0 | 5.0 |
| Solvesso 150ND | 11.2 | 17.5 |
| Aerosil R972 | 0.6 | 0.3 |
| BYK-057 | 0.3 | |
| Ti pure R960 | 55.0 | |
| Special black 4 | | 12.0 |

| | | |
|---|---|---|
| Special black 4: Pigmentruß von Evonik | | |

### Herstellung der Testformulierungen

**Zusammensetzung des Klarlacks**

| ***Klarlack*** | |
|---|---|
| Uralac SN 831 | 64.0 |
| Cymel 303 | 13.8 |
| Dynapol Catalyst 1203 | 4.9 |
| BYK-057 | 0.4 |
| BYK-355 | 1.1 |
| Solvesso 150 ND | 10.5 |
| MPA | 5.3 |
| 100.0 | 100.0 |

**Zusammensetzung der Testformulierungen**

| | ***Weiß** : **Schwarz*** |
|---|---|
| | ***97:3*** |
| Klarlack | 19.8 |
| Ti pure R960 | 26.5 |
| Special black 4 | 3.7 |
| | 50.0 |

Die Viskosität der Testformulierungen wurde im Anschluss an die Herstellung mit Solvesso 150ND auf 90 - 110 sec (DIN 4 -Auslaufbecher, 23°C) eingestellt.

Ein Teil der Testformulierung wird 1 Woche bei 50°C gelagert.

### Applikation der Testformulierung

Die Testformulierungen wurden am Tag der Herstellung unter den folgenden Bedingungen auf Substrate aufgetragen.

| | |
|---|---|
| Substrate: | Alcan Aluminiumbleche, vorbeschichtet mit einer |
| Rakelauftrag: | 80 µm (naß) |
| Ofentemperatur: | 320°C |
| Einbrennzeit: | 30 s |
| max. Metallltemperatur: | 235°C |
| Trockenfilmschichtdicke: | 18-20 µm |

Die Ausschwimm-, Aufschwimm- und Flokkulationseigenschaften wurden wie folgt evaluiert.

Die jeweilige Testformulierung wurde in 2 Portionen aufgeteilt.

Die jeweils erste Portion der betreffenden Testformulierung wurde mit einer Zahnscheibe bei 6000 Umdrehungen pro Minute für 1 Minute gerührt und dann unmittelbar auf die rechte Hälfte der Substratoberfläche aufgetragen. Gleichzeitig wurde auf die linke Hälfte der Substratoberfläche die jeweils zweite Portion der betreffenden Testformulierung ohne vorheriges Rühren aufgetragen.

### Rub-Out-Test

Unmittelbar nach der Applikation wurden die frisch aufgetragenen Lackschichten auf beiden Hälften der Substratoberfläche einem Rub-Out-Test unterzogen.

Hierzu wurden einige Stellen der frischen Lackschichten nach dem Auftrag mechanisch verrieben und anschließend die durch das Verreiben hervorgerufene Farbtonänderung (Rub-Out-Effekt) gegenüber dem nicht verriebenen Lack gemessen. Ursachen für den Rub-Out-Effekt sind z.B. Flokkulation und/oder Aufschwimmen von Pigmenten. Falls Pigmentflokkulate vorliegen, werden diese durch die Scherwirkung beim Reiben zerstört, und es entsteht der ursprünglich angestrebte Farbton. Der Rub-Out-Effekt läßt sich durch geeignete Dispergiermittel minimieren und ist somit ein Maß für die Wirksamkeit eines Dispergiermittels. Farbmetrische Messungen Gerät: Color guide, BYK-Gardner Lichtart: Normlicht D65 (Tageslicht) Meßfeld: 10° Meßgeometrie: d/8° spin (diffuse Beleuchtung, Beobachtungswinkel 8°) Anzahl der Messungen: n = 3

Die Ergebnisse der Farbmetrik sind in der folgenden Tabelle wiedergegeben. Der für eine Formulierung ermittelte ΔE-Wert gibt den Farbunterschied zwischen den verriebenen und den nicht verriebenen Stellen der Beschichtung an (Rub-Out-Effekt).
Δ E 1 = Δ E nicht gerührt
Δ E 2 = Δ E gerührt
Δ E 3 = Δ E nicht gerührt / gerührt

| | **Δ E 1** | **Δ E 2** | **Δ E 3** | **Glanz 60°** | **Viskosität des schwarzen Pigmentkonzentrates** |
|---|---|---|---|---|---|
| Nach Anreibung | | | | | |
| **S6** | 0,65 | 0,59 | 0,06 | 85 | niedrig |
| **S7** | 0,64 | 0,58 | 0,07 | 85 | niedrig |
| **S8** | 0,59 | 0,57 | 0,05 | 86 | niedrig |
| **S9** | 0,54 | 0,49 | 0,05 | 86 | niedrig |
| **S20** | 0,69 | 0,62 | 0,08 | 86 | niedrig |
| **S22** | 0,48 | 0,55 | 0,04 | 90 | Niedrig |
| **P19** | 0.71 | 0,75 | 0.08 | 84 | niedrig |
| **P20** | 0,65 | 0,63 | 0,06 | 85 | niedrig |
| **PX2** (nicht erfindungsgemäß) | 0,98 | 1,02 | 0,18 | 79 | hoch |

| Nach 1 Woche Lagerung bei 50°C | | | | | |
|---|---|---|---|---|---|
| **S6** | 0,64 | 0,58 | 0,06 | 86 | niedrig |
| **S7** | 0,62 | 0,57 | 0,06 | 84 | niedrig |
| **S8** | 0,58 | 0,59 | 0,05 | 85 | niedrig |
| **S9** | 0,52 | 0,47 | 0,05 | 87 | niedrig |
| **S20** | 0,68 | 0,61 | 0,08 | 87 | niedrig |
| **S22** | 0,52 | 0,54 | 0,05 | 90 | niedrig |
| **P19** | 0,70 | 0,74 | 0,07 | 84 | niedrig |
| **P20** | 0,65 | 0,62 | 0,06 | 85 | niedrig |
| **PX2** | 1,23 | 1,22 | 0,26 | 76 | hoch |

**Formulierung: Paraloid B 66 (Thermoplastisches Acrylat von Dow Chemicals) Mahlgut:**

| | |
|---|---|
| Paraloid B 66 (50% in Xylol) | 25,00 |
| DIDP | 2,00 |
| Xylol | 3,5 |
| MPA | 2,50 |
| Additiv | 1,5 |
| Aerosil R 972 | 0,50 |
| Pigment | 65,00 |
| Gesamt | 100,00 |

| | |
|---|---|
| Paraloid B 66 = Thermoplastisches Acrylatharz von Dow Chemicals DIDP =Diisodecylphthalat | |

**Auflackgut:**

| | |
|---|---|
| Mahlgutpaste | 38,50 |
| Paraloid B 66 | 50,00 |
| MPA | 3,40 |
| Xylol | 8,00 |
| BYK-306 | 0,10 |

| | |
|---|---|
| BYK-306: Silikonadditiv von Byk-Chemie | |

**Ergebnisse Paraloid B 66**

| **Pigmente** | **Kronos 2310** | | | **Tioxide TR 92** | | | **Ti-Pure R 960** | | |
|---|---|---|---|---|---|---|---|---|---|
| **Additive** | **Viskosität** | **Δ E** | **Glanz** | **Viskosität** | **Δ E** | **Glanz** | **Viskosität** | **Δ E** | **Glanz** |
| PX1 | 3 | 4,5 | 85 | 4 | 2,5 | 83 | 4 | 3,9 | 73 |
| PX2 | 4 | 5,1 | 81 | 5 | 3,1 | 79 | 5 | 5,7 | 63 |
| P6 | 2 | 3,3 | 91 | 3 | 1,1 | 86 | 2 | 2,5 | 80 |
| P18 | 2 | 2,5 | 95 | 3 | 0,5 | 88 | 1 | 2,1 | 83 |

| | | | | | | | | | |
|---|---|---|---|---|---|---|---|---|---|
| Kronos 2310: Titandioxidpigment mit basischer Oberfläche Tioxide TR 92: Titandioxidpigment mit basischer Oberfläche Ti-Pure R 960: Titandioxidpigment mit saurer Oberfläche Viskosität: 1-5, 1 = niedrig, 5= hoch | | | | | | | | | |

### Formulierung: Macrynal SM 510 (2-K Acryl)

**Mahlgut:**

| | |
|---|---|
| Macrynal SM 510 | 22,22 |
| MPA | 2,00 |
| Solvesso 100 | 2,00 |
| Xylol | 3,00 |
| Butyl acetat | 3,5 |
| BYK-066 N | 0,30 |
| Additiv | 1,5 |
| Aerosil R 972 | 0,50 |
| Pigment | 65,00 |
| Gesamt | 100,00 |

| | |
|---|---|
| Macrynal SM 510 = Polyacrylatharz von Cytec BYK-066 N: Silikonentschäumer von Byk-Chemie | |

**Auflackgut:**

| | |
|---|---|
| Mahlgutpaste | 38,50 |
| Macrynal SM 510 | 45,00 |
| MPA | 1,00 |
| Solvesso 100 | 7,00 |
| Xylol | 1,40 |
| Butylacetat | 7,00 |
| BYK-306 | 0,10 |

| **Härterlösung** | **Stamm zu Härter: 2:1** |
|---|---|
| Desmodur N 75 | 25,0 |
| Butylacetat | 8,70 |
| Solvesso 100 | 8,80 |
| MPA | 2,50 |
| Xylol | 5,00 |
| Total | 50,00 |

| | |
|---|---|
| BYK-306: Silikonhaltiges Oberflächenadditiv von Byk-Chemie Desmodur N 75: Aliphatisches Polyisocyanat (HDI-Biuret) von Bayer, 75%ig in MPA | |

**Ergebnisse : Macrynal SM 510**

| **Pigmente** | **Kronos 2310** | | | **Tioxide TR 92** | | | **Ti-Pure R 960** | | |
|---|---|---|---|---|---|---|---|---|---|
| **Additive** | **Viskosität** | **Δ E** | **Glanz** | **Viskosität** | **Δ E** | **Glanz** | **Viskosität** | **Δ E** | **Glanz** |
| PX1 | 5 | 1,2 | 85 | 5 | 1,1 | 84 | 5 | 1,6 | 86 |
| PX2 | 5 | 1,3 | 84 | 5 | 1,6 | 81 | 5 | 5,7 | 82 |
| P6 | 2 | 0,6 | 95 | 1 | 0,3 | 90 | 2 | 0,7 | 91 |
| P18 | 1 | 0,5 | 91 | 2 | 0,6 | 93 | 1 | 0,5 | 95 |
| S6 | 1 | 0,5 | 94 | 1 | 0,5 | 92 | 2 | 0,7 | 90 |
| S9 | 1 | 0,4 | 92 | 1 | 0,6 | 92 | 1 | 0,5 | 94 |

### Formulierung: Setalux 1756 VV 65

**Mahlgut:**

| | |
|---|---|
| Setalux 1756 VV-65 | 22,22 |
| **Additiv** | **1,5** |
| Solvesso 100 | 5,5 |
| Xylol | 5,28 |
| Aerosil R 972 | 0,50 |
| Pigment | 65,00 |
| Gesamt | 100,00 |

| | |
|---|---|
| Setalux 1756 VV-65: Hydroxyacrylatcopolymer von Nuplex, 50%ig in Xylol/Butanol | |

**Auflackgut:**

| | |
|---|---|
| Mahlgutpaste | 38,50 |
| Setalux 1756 VV-65 | 40,00 |
| Setamine US 138-BB 70 | 16,00 |
| Solvesso 100 | 3,00 |
| Xylol | 2,30 |
| BYK-310 | 0,20 |
| Gesamt | 100,00 |

| | |
|---|---|
| Setamine US 138-BB 70: Melaminharz von Nuplex BYK-310: Polyestermodifiziertes Polydimethylsiloxane von Byk-Chemie | |

Pigment/ Bindemittel: 0,8 : 1 im Lack
Abmischung: 29,5g vom Weißlack + 0,5 g von Schwarzpaste
Einbrennbedingungen: 10 Minuten ablüften, danach 20 Minuten bei 140 °C

**Ergebnisse : Setalux 1756 VV 65**

| **Pigmente** | **Kronos 2310** | | | **Tioxide TR 92** | | | **Ti-Pure R 960** | | |
|---|---|---|---|---|---|---|---|---|---|
| **Additive** | **Viskosität** | **Δ E** | **Glanz** | **Viskosität** | **Δ E** | **Glanz** | **Viskosität** | **Δ E** | **Glanz** |
| PX1 | 5 | 1,2 | 89 | 4 | 1,3 | 89 | 5 | 0,9 | 88 |
| PX2 | 5 | 1,5 | 84 | 5 | 1,7 | 88 | 5 | 1,6 | 84 |
| P6 | 1 | 0,6 | 95 | 1 | 0,3 | 92 | 2 | 0,5 | 93 |
| P18 | 1 | 0,3 | 98 | 1 | 0,6 | 98 | 1 | 0,3 | 96 |
| P22 | 1 | 0,7 | 95 | 1 | 0,3 | 92 | 2 | 0,3 | 94 |
| S6 | 1 | 0,6 | 91 | 2 | 0,9 | 90 | 2 | 0,4 | 93 |
| S9 | 1 | 0,8 | 94 | 1 | 0,8 | 91 | 1 | 0,3 | 94 |

**Weitere Ergebnisse mit Setalux 1756 VV 65**

| **Pigment** | **Ti-Pure R 960** | | |
|---|---|---|---|
| **Additive** | **Viskosität** | **Δ E** | **Glanz** |
| P26 | 1 | 0,6 | 95 |
| P28 | 1 | 0,5 | 94 |
| P37 | 1 | 0,7 | 92 |
| P38 | 1 | 0,4 | 96 |
| P39 | 1 | 0,7 | 95 |
| P41 | 1 | 0,6 | 92 |
| P43 | 2 | 0,8 | 92 |
| P47 | 3 | 0,9 | 90 |
| S22 | 1 | 0,6 | 94 |

### Fazit der Beispiele:

Die generell besonders gute Qualität der erfindungsgemäßen Phosphorsäureesterderivate zeigt sich bezüglich Glanz, Viskosität und Rub-Out-Effekt. Besonders hervorzuheben ist die gute Universalität bezüglich sauren und basischen zu dispergierenden Pigmentpartikeln (siehe u. a. "Ergebnisse Paraloid B 66" - gemäß vorstehender Tabelle).

## Patentansprüche

1. Phosphorsäureesterderivate,
die gemäß der allgemeinen Formel (I) vorliegen
Y(-O-CO-NH-R¹-NH-CO-X-Z¹)_{q} (I)
mit
Y gleich oder verschieden sowie repräsentiert durch einen 1 bis 1000 Kohlenstoffatome aufweisenden verzweigten oder unverzweigten, gesättigten oder ungesättigten organischen Rest,
q gleich oder verschieden sowie repräsentiert durch eine ganze Zahl von 1 bis 10,
R¹ gleich oder verschieden sowie repräsentiert durch einen 6 bis 20 Kohlenstoffatome enthaltenden gesättigten oder ungesättigten, verzweigten oder unverzweigten organischen Rest,
X gleich oder verschieden sowie repräsentiert durch NH und/oder NZ²
mit
Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens 2 Kohlenstoffatome enthaltenden verzweigten oder unverzweigten, gesättigten oder ungesättigten organischen Rest, der mindestens eine Phosphorsäureestergruppe aufweist.

2. Phosphorsäurederivate nach Anspruch 1, **dadurch gekennzeichnet, dass** q gleich oder verschieden ist und repräsentiert wird durch eine ganze Zahl von 1 bis 5, bevorzugt durch 1 und/ oder 2.

3. Phosphorsäureesterderivate nach Anspruch 1 oder 2, **dadurch gekennzeichnet, dass** q durch 1 repräsentiert wird, so dass die Phosphorsäureesterderivate gemäß der allgemeinen Formel (la) vorliegen
Y-O-CO-NH-R¹-NH-CO-X-Z¹ (la)
mit
Y gleich oder verschieden sowie repräsentiert durch einen 1 bis 1000 Kohlenstoffatome aufweisenden verzweigten oder unverzweigten, gesättigten oder ungesättigten organischen Rest,
R¹ gleich oder verschieden sowie repräsentiert durch einen 6 bis 20 Kohlenstoffatome enthaltenden gesättigten oder ungesättigten, verzweigten oder unverzweigten organischen Rest,
X gleich oder verschieden sowie repräsentiert durch NH und/oder NZ²
mit
Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens 2 Kohlenstoffatome enthaltenden verzweigten oder unverzweigten, gesättigten oder ungesättigten organischen Rest, der mindestens eine Phosphorsäureestergruppe aufweist.

4. Phosphorsäureesterderivate nach einem der Ansprüche 1 bis 3, **dadurch gekennzeichnet, dass** Y mindestens einen Polyetherrest, Polyesterrest, Kohlenwasserstoffrest und/oder Polysiloxanrest enthält.

5. Phosphorsäureesterderivate nach einem der Ansprüche 1 bis 4, **dadurch gekennzeichnet, dass** Y insgesamt 1 bis 450 Ethersauerstoffatome enthält, welche bevorzugt in Ethersauerstoffatome aufweisenden Gruppen enthalten sind, die sich ableiten von Polytetrahydrofuran, Polyoxetanen und/oder Polyoxiranen.

6. Phosphorsäureesterderivate nach einem der Ansprüche 1 bis 5, **dadurch gekennzeichnet, dass** Y insgesamt 3 bis 400 Ethersauerstoffatome enthält, wobei mindestens 50, bevorzugt mindestens 80 Mol-% der Ethersauerstoffatome in Ethylenoxid- und/oder Propylenoxidstruktureinheiten vorliegen.

7. Phosphorsäureesterderivate nach einem der Ansprüche 1 bis 6, **dadurch gekennzeichnet, dass** R¹ gleich oder verschieden ist sowie in Form eines Kohlenwasserstoffrests, bevorzugt als Arylengruppe, als verzweigte oder unverzweigte Alkylarylengruppe und/oder als azyklische, zyklische, verzweigte oder unverzweigte Alkylengruppe vorliegt.

8. Phosphorsäureesterderivate nach einem der Ansprüche 1 bis 7, **dadurch gekennzeichnet, dass** R¹ resultiert aus dem Kohlenwasserstoffrest eines zwei unterschiedlich reaktive NCO-Gruppen enthaltenden Diisocyanats, bevorzugt von Toluol-2,4-diisocyanat und/oder Isophorondiisocyanat.

9. Phosphorsäureesterderivate nach einem der Ansprüche 1 bis 8, **dadurch gekennzeichnet, dass** Z¹ gleich oder verschieden ist sowie repräsentiert wird durch die allgemeine Formel (II)
R²-O-PO(OR³)ₙ(OH)₂₋ₙ (II)
mit
R² gleich oder verschieden sowie repräsentiert durch einen mindestens zwei Kohlenstoffatome aufweisenden gesättigten oder ungesättigten, verzweigten oder unverzweigten organischen Rest,
R³ gleich oder verschieden sowie repräsentiert durch einen mindestens ein Kohlenstoffatom enthaltenden gesättigten oder ungesättigten, verzweigten oder unverzweigten organischen Rest und
n gleich oder verschieden sowie repräsentiert durch 0 und/oder 1.

10. Phosphorsäureesterderivate nach Anspruch 9, **dadurch gekennzeichnet, dass** n gleich 0 ist.

11. Phosphorsäureesterderivate nach Anspruch 9, **dadurch gekennzeichnet, dass** n gleich 1 ist und R³ repräsentiert wird durch -X-CO-NH-R¹-NH-CO-O-Y.

12. Phosphorsäureesterderivate nach einem der Ansprüche 9 bis 11, **dadurch gekennzeichnet, dass** R² gleich oder verschieden ist und repräsentiert wird durch einen gesättigten, linearen C₂-C₄₀-Alkylenrest.

13. Phosphorsäureesterderivate nach einem der Ansprüche 1 bis 12, **dadurch gekennzeichnet, dass** Z² gleich oder verschieden ist sowie repräsentiert wird durch einen enthaltender C₁-C₅₀-Kohlenwasserstoffrest, der optional Ethergruppen enthält und/oder einen gemäß der allgemeinen Formel (III) vorliegenden Rest
R⁴-O-PO(OR⁵)ₘ(OH)₂₋ₘ (III)
mit
R⁴ gleich oder verschieden sowie repräsentiert durch einen mindestens zwei Kohlenstoffatome aufweisenden gesättigten oder ungesättigten, verzweigten oder unverzweigten organischen Rest,
R⁵ gleich oder verschieden sowie repräsentiert durch einen mindestens ein Kohlenstoffatom enthaltenden gesättigten oder ungesättigten, verzweigten oder unverzweigten organischen Rest sowie
m gleich oder verschieden sowie repräsentiert durch 0 und/oder 1.

14. Phosphorsäureesterderivate nach Anspruch 13, **dadurch gekennzeichnet, dass** m gleich 0 ist sowie R⁴ gleich oder verschieden ist und bevorzugt repräsentiert wird durch einen gesättigten, linearen C₂-C₄₀-Alkylenrest.

15. Phosphorsäureesterderivate nach einem der Ansprüche 1 bis 14, die in versalzter oder teilversalzter Form vorliegen.

16. Verfahren zur Herstellung von Phosphorsäureesterderivaten gemäß einem der Ansprüche 1 bis 15, **dadurch gekennzeichnet, dass** in einem ersten Verfahrensschritt ein Diisocyanat R¹(NCO)₂ mit einem Alkohol Y(-OH)q unter Ausbildung eines Urethans der allgemeinen Formel (IV)
Y(-O-CO-NH-R¹-NCO)_{q} (IV)
umgesetzt wird und in einem zweiten Schritt das Urethan der allgemeinen Formel (IV) mit einem mindestens eine Hydroxylgruppe sowie die Gruppe X aufweisenden Amin zu einem mindestens eine Hydroxylgruppe aufweisenden Harnstoffurethan umgesetzt wird, wobei in einem dritten Schritt mindestens eine Hydroxylgruppe des Harnstoffurethans einer Umsetzung zu einer Phosphorsäureestergruppe unterzogen wird, mit der Maßgabe, dass Y, q, R¹ sowie X die in den Ansprüchen 1 bis 15 definierten Entsprechungen aufweisen.

17. Verfahren nach Anspruch 16, **dadurch gekennzeichnet, dass** ein Diisocyanat R¹(NCO)₂ eingesetzt wird, welches zwei unterschiedlich reaktive NCO-Gruppen aufweist, bevorzugt Toluol-2,4-diisocyanat und/oder Isophorondiisocyanat, welches in Schritt 1 gegenüber dem Alkohol Y(-OH)q in einem molaren Verhältnis von mindestens (1,1 * arithmetischer Mittelwert von q) : 1,0, bevorzugt mindestens (2,0 * arithmetischer Mittelwert von q) : 1,0, eingesetzt wird, so dass nicht zum Urethan der allgemeinen Formel (IV) umgesetztes Diisocyanat anfällt, welches vor der Durchführung des zweiten Schritts bevorzugt durch Destillation aus dem Reaktionsgemisch entfernt wird und im dritten Schritt bevorzugt Polyphosphorsäure zur Umsetzung mindestens einer Hydroxylgruppe des Harnstoffurethans eingesetzt wird.

18. Verfahren nach Anspruch 17, **dadurch gekennzeichnet, dass** im ersten Verfahrensschritt als Alkohol ein Monoalkohol Y-OH verwendet wird und dass das Diisocyanat R¹(NCO)₂ gegenüber dem Monoalkohol Y-OH in einem molaren Verhältnis von mindestens 1,1 : 1,0, bevorzugt mindestens 2,5 : 1, eingesetzt wird.

19. Additivkomposition herstellbar gemäß dem Verfahren nach Anspruch 18 enthaltend
a. 10 bis 100 Gew.-% Phosphorsäureesterderivate gemäß Anspruch 3,
b. 0 bis 10 Gew.-% Diurethan gemäß der allgemeinen Formel Y-O-CO-NH-R¹-NH-CO-O-Y mit Y gleich oder verschieden,
c. 0 bis 10 Gew.-% Diharnstoff der allgemeinen Formel Z¹-X-CO-NH-R¹-NH-CO-X-Z¹ mit Z¹ gleich oder verschieden sowie
d. 0 bis 8 Gew.-% Urethan der allgemeinen Formel Y-O-CO-NH-R¹-NCO.

20. Verwendung von Phosphorsäureesterderivaten gemäß einem der Ansprüche 1 bis 15 und/oder einer Additivkomposition gemäß Anspruch 19, als Additiv, insbesondere als Netz- und Dispergiermittel, in Beschichtungen, insbesondere Lacken, Kunststoffen, Pigmentpasten, Dichtstoffen, Keramik, Kosmetika, Klebstoffen, Vergussmassen, Spachtelmassen, Druckfarben und Tinten.

21. Feststoffgemenge, welches Partikel und/oder Fasern enthält, die mit Phosphorsäureesterderivaten gemäß einem der Ansprüche 1 bis 15 und/oder einer Additivkomposition gemäß Anspruch 19 behandelt worden sind.

22. Lack und/oder Kunststoff enthaltend Phosphorsäureesterderivate gemäß einem der Ansprüche 1 bis 15 und/oder eine Additivkomposition gemäß Anspruch 19.

## Claims

1. Phosphoric acid ester derivatives,
which conform to general formula (I)
Y(-O-CO-NH-R¹-NH-CO-X-Z¹)_{q} (I)
where
Y is identical or different and is represented by a branched or unbranched, saturated or unsaturated organic radical containing 1 to 1000 carbon atoms,
q is identical or different and is represented by an integer from 1 to 10,
R¹ is identical or different and is represented by a saturated or unsaturated, branched or unbranched organic radical containing 6 to 20 carbon atoms,
X is identical or different and is represented by NH and/or NZ²
where
Z² is identical or different and is represented by a branched or unbranched, saturated or unsaturated organic radical,
Z¹ is identical or different and is represented by a branched or unbranched, saturated or unsaturated organic radical containing at least 2 carbon atoms and having at least one phosphoric acid ester group.

2. Phosphoric acid ester derivatives according to claim 1, **characterized in that** q is identical or different and is represented by an integer from 1 to 5, preferably by 1 and/or 2.

3. Phosphoric acid ester derivatives according to claim 1 or 2, **characterized in that** q is represented by 1, so that
the phosphoric acid ester derivatives conform to general formula (Ia)
Y-O-CO-NH-R¹-NH-CO-X-Z¹ (Ia)
where
Y is identical or different and is represented by a branched or unbranched, saturated or unsaturated organic radical containing 1 to 1000 carbon atoms,
R¹ is identical or different and is represented by a saturated or unsaturated, branched or unbranched organic radical containing 6 to 20 carbon atoms,
X is identical or different and is represented by NH and/or NZ²
where
Z² is identical or different and is represented by a branched or unbranched, saturated or unsaturated organic radical,
Z¹ is identical or different and is represented by a branched or unbranched, saturated or unsaturated organic radical containing at least 2 carbon atoms and having at least one phosphoric acid ester group.

4. Phosphoric acid ester derivatives according to any of claims 1 to 3, **characterized in that** Y contains at least one polyether radical, polyester radical, hydrocarbon radical and/or polysiloxane radical.

5. Phosphoric acid ester derivatives according to any of claims 1 to 4, **characterized in that** Y contains a total of 1 to 450 ether oxygen atoms which are preferably contained in groups having ether oxygen atoms, said groups being derived from polytetrahydrofuran, polyoxetanes and/or polyoxiranes.

6. Phosphoric acid ester derivatives according to any of claims 1 to 5, **characterized in that** Y contains a total of 3 to 400 ether oxygen atoms, wherein at least 50 mol%, preferably at least 80 mol%, of the ether oxygen atoms are present in ethylene oxide and/or propylene oxide structural units.

7. Phosphoric acid ester derivatives according to any of claims 1 to 6, **characterized in that** R¹ is identical or different and is present in the form of a hydrocarbon radical, preferably as an arylene group, as a branched or unbranched alkylarylene group and/or as an acyclic, cyclic, branched or unbranched alkylene group.

8. Phosphoric acid ester derivatives according to any of claims 1 to 7, **characterized in that** R¹ results from the hydrocarbon radical of a diisocyanate containing two differently reactive NCO groups, preferably of toluene 2,4-diisocyanate and/or isophorone diisocyanate.

9. Phosphoric acid ester derivatives according to any of claims 1 to 8, **characterized in that** Z¹ is identical or different and is represented by general formula (II)
R²-O-PO(OR³)ₙ(OH)₂₋ₙ (II)
where
R² is identical or different and is represented by a saturated or unsaturated, branched or unbranched organic radical containing at least two carbon atoms,
R³ is identical or different and is represented by a saturated or unsaturated, branched or unbranched organic radical containing at least one carbon atom, and
n is identical or different and is represented by 0 and/or 1.

10. Phosphoric acid ester derivatives according to claim 9, **characterized in that** n is 0.

11. Phosphoric acid ester derivatives according to claim 9, **characterized in that** n is 1 and R³ is represented by -X-CO-NH-R¹-NH-CO-O-Y.

12. Phosphoric acid ester derivatives according to any of claims 9 to 11, **characterized in that** R² is identical or different and is represented by a saturated, linear C₂-C₄₀ alkylene radical.

13. Phosphoric acid ester derivatives according to any of claims 1 to 12, **characterized in that** Z² is identical or different and is represented by a C₁-C₅₀ hydrocarbon radical, which optionally contains ether groups, and/or a radical conforming to general formula (III)
R⁴-O-PO(OR⁵)ₘ(OH)₂₋ₘ (III)
where
R⁴ is identical or different and is represented by a saturated or unsaturated, branched or unbranched organic radical containing at least two carbon atoms,
R⁵ is identical or different and is represented by a saturated or unsaturated, branched or unbranched organic radical containing at least one carbon atom, and
m is identical or different and is represented by 0 and/or 1.

14. Phosphoric acid ester derivatives according to claim 13, **characterized in that** m is 0 and R⁴ is identical or different and is preferably represented by a saturated, linear C₂-C₄₀ alkylene radical.

15. Phosphoric acid ester derivatives according to any of claims 1 to 14, which are present in salified or partially salified form.

16. Method for producing phosphoric acid ester derivatives according to any of claims 1 to 15, **characterized in that**, in a first method step, a diisocyanate R¹(NCO)₂ is reacted with an alcohol Y(-OH)q to form a urethane of general formula (IV)
Y(-O-CO-NH-R¹-NCO)_{q} (IV)
and, in a second step, the urethane of general formula (IV) is reacted with an amine having at least one hydroxyl group and the group X to form a urea urethane having at least one hydroxyl group, wherein, in a third step, at least one hydroxyl group of the urea urethane undergoes a reaction to form a phosphoric acid ester group, with the proviso that Y, q, R¹ and X have the meanings defined in claims 1 to 15.

17. Method according to claim 16, **characterized in that** use is made of a diisocyanate R¹(NCO)₂ which has two differently reactive NCO groups, preferably of toluene 2,4-diisocyanate and/or isophorone diisocyanate, which is used in step 1 in a molar ratio of at least (1.1 * arithmetic mean of q) : 1.0, preferably at least (2.0 * arithmetic mean of q) : 1.0, with respect to the alcohol Y(-OH)q, so that diisocyanate that has not reacted to form the urethane of general formula (IV) is obtained, which is removed before carrying out the second step, preferably by distillation from the reaction mixture, and in the third step preferably polyphosphoric acid is used to react at least one hydroxyl group of the urea urethane.

18. Method according to claim 17, **characterized in that**, in the first method step, a monoalcohol Y-OH is used as the alcohol, and **in that** the diisocyanate R¹(NCO)₂ is used in a molar ratio of at least 1.1 : 1.0, preferably at least 2.5 : 1, with respect to the monoalcohol Y-OH.

19. Additive composition which can be produced by the method according to claim 18, containing
a. 10 to 100% by weight phosphoric acid ester derivatives according to claim 3,
b. 0 to 10% by weight diurethane according to general formula Y-O-CO-NH-R¹-NH-CO-O-Y, where Y is identical or different,
c. 0 to 10% by weight diurea of general formula Z¹-X-CO-NH-R¹-NH-CO-X-Z¹, where Z¹ is identical or different, and
d. 0 to 8% by weight urethane of general formula Y-O-CO-NH-R¹-NCO.

20. Use of phosphoric acid ester derivatives according to any of claims 1 to 15 and/or of an additive composition according to claim 19, as an additive, in particular as a wetting and dispersing agent, in coatings, particularly paints, plastics, pigment pastes, sealing compounds, ceramics, cosmetics, adhesives, casting compounds, filling compounds, inks and printing inks.

21. Solids mixture containing particles and/or fibres which have been treated with phosphoric acid ester derivatives according to any of claims 1 to 15 and/or with an additive composition according to claim 19.

22. Paint and/or plastic containing phosphoric acid ester derivatives according to any of claims 1 to 15 and/or an additive composition according to claim 19.

## Revendications

1. Dérivé d'ester d'acide phosphorique qui se présente selon la formule générale (I)
**Y(-O-CO-NH-R¹-NH-CO-X-Z¹)_{q}** **(I)**
dans laquelle
Y est identique ou différent et représente un radical organique ramifié ou non ramifié, saturé ou insaturé, comportant 1 à 1 000 atomes de carbone,
q est identique ou différent et représente un nombre entier compris entre 1 et 10,
R¹ est identique ou différent et représente un radial organique saturé ou insaturé, ramifié ou non ramifié, comportant 6 à 20 atomes de carbone,
X est identique ou différent et représente NH et/ou NZ²
Z², identique ou différent, représentant un radical organique ramifié ou non ramifié, saturé ou insaturé,
Z¹ est identique ou différent et représente un radical organique ramifié ou non ramifié, saturé ou insaturé, comportant au moins 2 atomes de carbone, qui présente au moins un groupement ester d'acide phosphorique.

2. Dérivé d'acide phosphorique selon la revendication 1, **caractérisé en ce que** q est identique ou différent et représente un nombre entier compris entre 1 et 5, de préférence égal à 1 et/ou 2.

3. Dérivé d'ester d'acide phosphorique selon la revendication 1 ou 2, **caractérisé en ce que** q représente 1, si bien que le dérivé d'ester d'acide phosphorique est présent selon la formule générale (Ia)
**Y-O-CO-NH-R¹-NH-CO-X-Z¹** **(Ia)**
dans laquelle
Y est identique ou différent et représente un radical organique ramifié ou non ramifié, saturé ou insaturé, comportant 1 à 1 000 atomes de carbone,
R¹ est identique ou différent et représente un radial organique saturé ou insaturé, ramifié ou non ramifié, comportant 6 à 20 atomes de carbone,
X est identique ou différent et représente NH et/ou NZ²
Z², identique ou différent, représentant un radical organique ramifié ou non ramifié, saturé ou insaturé,
Z¹ est identique ou différent et représente un radical organique ramifié ou non ramifié, saturé ou insaturé, comportant au moins 2 atomes de carbone, qui présente au moins un groupement ester d'acide phosphorique.

4. Dérivé d'ester d'acide phosphorique selon l'une des revendications 1 à 3, **caractérisé en ce que** Y contient au moins un radical polyéther, un radical polyester, un radical hydrocarbure et/ou un radical polysiloxane.

5. Dérivé d'ester d'acide phosphorique selon l'une des revendications 1 à 4, **caractérisé en ce que** Y contient au total 1 à 450 atomes d'éther-oxygène, qui sont de préférence contenus dans des groupes présentant des atomes d'éther-oxygène qui dérivent du polytétrahydrofurane, de polyoxétanes et/ou de polyoxiranes.

6. Dérivé d'ester d'acide phosphorique selon l'une des revendications 1 à 5, **caractérisé en ce que** Y contient au total 3 à 400 atomes d'éther-oxygène, où au moins 50, de préférence au moins 80 % en moles des atomes d'éther-oxygène sont présents dans des motifs structurels d'oxyde d'éthylène et/ou d'oxyde de propylène.

7. Dérivé d'ester d'acide phosphorique selon l'une des revendications 1 à 6, **caractérisé en ce que** R¹ est identique ou différent et est présent sous la forme d'un radical hydrocarbure, de préférence en tant que groupement arylène, en tant que groupement alkylarylène ramifié ou non ramifié et/ou en tant que groupement alkylène acyclique, cyclique, ramifié ou non ramifié.

8. Dérivé d'ester d'acide phosphorique selon l'une des revendications 1 à 7, **caractérisé en ce que** R¹ résulte du radical hydrocarbure d'un diisocyanate contenant deux groupements NCO différemment réactifs, de préférence du toluène-2,4-diisocyanate et/ou de l'isophorone-diisocyanate.

9. Dérivé d'ester d'acide phosphorique selon l'une des revendications 1 à 8, **caractérisé en ce que** Z¹ est identique ou différent et est représenté par la formule générale (II)
**R²-O-PO(OR³)ₙ(OH)₂₋ₙ** **(II)**
dans laquelle
R² est identique ou différent et représente un radial organique saturé ou insaturé, ramifié ou non ramifié, comportant au moins deux atomes de carbone,
R³ est identique ou différent et représente un radial organique saturé ou insaturé, ramifié ou non ramifié, comportant au moins un atome de carbone, et
n est identique ou différent et représente 0 et/ou 1.

10. Dérivé d'ester d'acide phosphorique selon la revendication 9, **caractérisé en ce que** n vaut 0.

11. Dérivé d'ester d'acide phosphorique selon la revendication 9, **caractérisé en ce que** n vaut 1 et **en ce que** R³ représente -X-CO-NH-R¹-NH-CO-O-Y.

12. Dérivé d'ester d'acide phosphorique selon l'une des revendications 9 à 11, **caractérisé en ce que** R² est identique ou différent et représente un radical alkylène en C₂ à C₄₀ linéaire et saturé.

13. Dérivé d'ester d'acide phosphorique selon l'une des revendications 1 à 12, **caractérisé en ce que** Z² est identique ou différent et représente un radical hydrocarbure en C₁ à C₅₀ qui contient en option des groupements éther, et/ou un radical présent selon la formule générale (III)
**R⁴-O-PO(OR⁵)ₘ(OH)₂₋ₘ** **(III)**
dans laquelle
R⁴ est identique ou différent et représente un radical organique saturé ou insaturé, ramifié ou non ramifié, présentant au moins deux atomes de carbone,
R⁵ est identique ou différent et représente un radical organique saturé ou insaturé, ramifié ou non ramifié, présentant au moins un atome de carbone, et
m est identique ou différent et vaut 0 et/ou 1.

14. Dérivé d'ester d'acide phosphorique selon la revendication 13, **caractérisé en ce que** m vaut 0 et R⁴ est identique ou différent et représente de préférence un radical alkylène en C₂ à C₄₀ saturé et linéaire.

15. Dérivé d'ester d'acide phosphorique selon l'une des revendications 1 à 14, qui se présente sous une forme salinisée ou partiellement salinisée.

16. Procédé de préparation de dérivés d'ester d'acide phosphorique selon l'une des revendications 1 à 15, **caractérisé en ce que**, lors d'une première étape de procédé, on convertit un diisocyanate R¹(NCO)₂ avec un alcool Y(-OH)_{q} avec formation d'un uréthane de formule générale (IV)
**Y(-O-CO-NH-R¹-NCO)_{q}** **(IV)**
et lors d'une seconde étape, on convertit l'uréthane de formule générale (IV) avec une amine présentant au moins un groupement hydroxyle et le groupement X en une urée-uréthane comportant au moins un groupement hydroxyle, suite à quoi, lors d'une troisième étape, on soumet au moins un groupement hydroxyle de l'urée-uréthane à une conversion en un groupement ester d'acide phosphorique, à la condition que Y, q, R¹ et X soient tels que définis selon les revendications 1 à 15.

17. Procédé selon la revendication 16, **caractérisé en ce que** l'on utilise un diisocyanate R¹(NCO)₂ qui présente deux groupements NCO-différemment réactifs, de préférence du toluène-2,4-diisocyanate et/ou de l'isophorone-diisocyanate, lequel est utilisé dans l'étape 1, par rapport à l'alcool Y(-OH)q, selon un rapport molaire d'au moins (1,1 * valeur arithmétique moyenne de q):1,0, de préférence d'au moins (2,0 * valeur arithmétique moyenne de q):1,0, si bien qu'il en résulte du diisocyanate non converti en uréthane de formule générale (IV) qui, avant de procéder à la seconde étape, est éliminé du mélange réactionnel de préférence par distillation, et **en ce que** lors d'une troisième étape, on utilise de préférence de l'acide polyphosphorique pour convertir au moins un groupement hydroxyle de l'urée-uréthane.

18. Procédé selon la revendication 17, **caractérisé en ce que** dans la première étape de procédé, on utilise comme alcool un monoalcool Y-OH, et **en ce que** l'on utilise le diisocyanate R¹(NCO)₂, par rapport au monoalcool Y-OH, selon un rapport molaire au moins égal à 1,1:1,0, de préférence au moins égal à 2,5:1.

19. Composition d'additif pouvant être préparée selon le procédé selon la revendication 18 et contenant
a. 10 à 100 % en poids de dérivé d'ester d'acide phosphorique selon la revendication 3,
b. 0 à 10 % en poids de diuréthane selon la formule générale Y-O-CO-NH-R¹-NH-CO-O-Y, Y étant identique ou différent,
c. 0 à 10 % en poids de diurée selon la formule générale Z¹-X-CO-NH-R¹-NH-CO-X-Z¹, Z¹ étant identique ou différent, et
d. 0 à 8 % en poids d'uréthane de formule générale Y-O-CO-NH-R¹-NCO.

20. Utilisation de dérivés de l'ester d'acide phosphorique selon l'une des revendications 1 à 15 et/ou d'une composition d'additif selon la revendication 19 en tant qu'additif, en particulier en tant qu'agent mouillant et dispersant, dans des revêtements, en particulier des laques, des plastiques, des pigments en pâte, des épaississants, des céramiques, des cosmétiques, des colles, des mastics à joint, des enduits, des encres d'imprimerie et des encres.

21. Mélange solide qui contient des particules et/ou des fibres qui ont été traitées avec des dérivés d'ester d'acide phosphorique selon l'une des revendications 1 à 15 et/ou une composition d'additif selon la revendication 19.

22. Laque et/ou plastique contenant des dérivés d'ester d'acide phosphorique selon l'une des revendications 1 à 15 et/ou une composition d'additif selon la revendication 19.
